(19)

Europäisches
Patentamt
European
Patent Office
Office européen
des brevets

(11) **EP 2 109 076 A1**

(12) **EUROPEAN PATENT APPLICATION**

(43) Date of publication:
**14.10.2009 Bulletin 2009/42**

(51) Int Cl.:
***G06Q 30/00*** *(2006.01)*

(21) Application number: **09157799.9**

(22) Date of filing: **10.04.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR** | • **Koiso, Takashi, M.**<br>**Tokyo Tokyo 141-8664 (JP)**<br>• **Narahashi, Masaki, M.**<br>**Tokyo Tokyo 141-8664 (JP)**<br>• **Takahata, Masami, M.**<br>**Tokyo Tokyo 141-8664 (JP)**<br>• **Iwase, Yoshinori, M.**<br>**Tokyo Tokyo 141-8664 (JP)** |
| (30) Priority: **11.04.2008 JP 2008103666** | |
| (71) Applicant: **Toshiba TEC Kabushiki Kaisha**<br>**Tokyo 141-8664 (JP)** | (74) Representative: **Uchida, Kenji et al**<br>**SA Fedit-Loriot**<br>**38, avenue Hoche**<br>**75008 Paris (FR)** |
| (72) Inventors:<br>• **Ikumi, Tomonori, M.**<br>**Tokyo Tokyo 141-8664 (JP)** | |

(54) **Flow line analysis apparatus and program recording medium**

(57)      A control section (37) edits a complete flow line as an entire trajectory in a sales area for each customer, based on data for a flow line generated from a camera image obtained by shooting the sales area. The complete flow line is reproduced as trajectories of customers by a display section (32). The control section (37) accepts input of information on transaction settlements by the customers. When the information is input through an input section (31), it is added to the complete flow line data of the customers being reproduced and is stored into a complete flow line database (38). The control section (37) matches the complete flow line data stored in the complete flow line database (38) with transaction data specified by the information on the transaction settlements added to the complete flow line data.

FIG. 1

EP 2 109 076 A1

**Description**

The present invention relates to a flow line analysis apparatus for analyzing the behavior of a customer in a store, based on flow line data indicative of the customer's movement path and transaction data indicative of the contents of a transaction with the customer, and a computer-readable recording medium stored with a program that enables a computer to function as the flow line analysis apparatus.

There has been conventionally known a flow line analysis apparatus disclosed in Jpn. Pat. Appln. KOKAI Publication No. 2006-350751. This apparatus has a picture database, sales information database, flow line conversion processing section, and flow line database. In the picture database, pictures taken by means of a plurality of cameras that are installed in a store are recorded in correlation with time information. In the sales information database, sales information input from a sales information input device is stored in correlation with a purchase time. The flow line conversion processing section fetches a picture recorded in the picture database and executes image processing for this picture to create flow line data. The flow line database is registered with the flow line data created in the flow line conversion processing section.

A flow line analyst specifies sales information from the sales information database. Thereupon, the flow line data in the flow line database is determined based on the purchase time in this sales information. Then, a flow line based on this flow line data is displayed. Thus, the analyst can analyze the flow line of each customer.

Jpn. Pat. Appln. KOKAI No. 2006-350751 contains a description that an image processing technology for pictures taken by cameras is used to extract a customer, trace the extracted customer, and obtain flow line data. According to the current image processing technology, however, even if the entire internal area of a store is shot without blind spots, it is very difficult to trace the movement of each customer in the entire store area as one flow line. For example, the flow line of one customer may be disconnected or confused with that of another customer. This may be caused by the interlaced paths of movement of customers, changes in each customer's features attributable to varying angles of view, motions of the customers who may raise their hands or stoop, etc. Conventionally, no solution has been proposed at all for the problem of frequent occurrence of such an awkward situation.

The object of the present invention is to provide a flow line analysis apparatus capable of accurately analyzing a flow line of a customer and a computer-readable recording medium stored with a program that enables a computer to function as a flow line analysis apparatus.

According to an aspect of the invention, a control section edits a complete flow line as an entire trajectory in a sales area for each customer, based on data for a flow line generated from a camera image obtained by shooting the sales area. The edited complete flow line is reproduced as trajectories of customers moving in the sales area by a display section. The control section accepts input of information on transaction settlements by the customers whose trajectories are reproduced. When the information on the transaction settlements is input through an input section, it is added to the complete flow line data of the customers being reproduced and is stored into a complete flow line database. The control section accesses a transaction database and matches the complete flow line data stored in the complete flow line database with transaction data specified by the information on the transaction settlements added to the complete flow line data.

The invention can be more fully understood from the following detailed description when taken in conjunction with the accompanying drawings, in which:

FIG. 1 is a block diagram showing a system configuration according to an embodiment the invention;
FIG. 2 shows a configuration of transaction data stored in a transaction database;
FIG. 3 is a diagram illustrating an in-store layout according to the embodiment;
FIG. 4 is a block diagram showing a configuration of the principal part of a flow line server according to the embodiment;
FIG. 5 is a configuration diagram of original flow line data stored in an original flow line database according to the embodiment;
FIG. 6 is a configuration diagram of edit flow line data stored in an edit flow line database according to the embodiment;
FIG. 7 is a diagram showing an example of a flow line editing screen according to the embodiment;
FIG. 8 is a flowchart showing a processing procedure of a control section with a flow line editing program activated according to the embodiment;
FIG. 9 is a flowchart showing a procedure of flow line data creation processing illustrated in FIG. 8;
FIG. 10 is a flowchart showing a procedure of flow line state definition processing illustrated in FIG. 8;
FIG. 11 is a flowchart showing a procedure of flow line disabling processing illustrated in FIG. 8;
FIG. 12 is a flowchart showing a procedure of flow line separation processing illustrated in FIG. 8;
FIG. 13 is a flowchart showing a procedure of coupling source flow line reproduction processing illustrated in FIG. 8;
FIG. 14 is a flowchart showing a procedure of coordinate conversion processing illustrated in FIG. 13;
FIG. 15 is a flowchart showing a procedure of coupling destination flow line candidate retrieval processing illustrated in FIG. 8;

FIG. 16 is a flowchart showing a procedure of coupling definition processing illustrated in FIG. 8;

FIG. 17 is a flowchart showing a procedure of coupling processing illustrated in FIG. 8;

FIG. 18 is a configuration diagram of complete flow line data stored in a complete flow line database according to the embodiment;

FIG. 19 is a diagram showing a primary data table formed in a data storage section of a flow line analysis apparatus, according to the embodiment;

FIG. 20 is a flowchart showing a processing procedure of the control section executed when an accounting input business of a flow line analysis menu is selected according to the embodiment;

FIG. 21 is a flowchart showing a processing procedure of the control section executed when a transaction matching business of the flow line analysis menu is selected according to the embodiment;

FIG. 22 is a flowchart showing a procedure of transaction ID list acquisition processing illustrated in FIG. 21;

FIG. 23 is a diagram showing an example of a database language SQL for extracting a transaction ID during an assigned matching period according to the embodiment;

FIG. 24 is a flowchart showing a procedure of flow line ID list acquisition processing illustrated in FIG. 21;

FIG. 25 is a flowchart specifically showing a procedure of automatic flow line matching processing illustrated in FIG. 21;

FIG. 26 is a diagram showing an example of a transaction ID list table according to the embodiment;

FIG. 27 is a diagram showing an example of a flow line ID list table according to the embodiment;

FIG. 28 is a diagram showing an example of a matching table according to the embodiment;

FIG. 29 is a flowchart specifically showing a procedure of manual flow line matching processing illustrated in FIG. 21;

FIG. 30 is a diagram showing an example of data of a sub-area setting table used according to the embodiment;

FIG. 31 is a diagram showing another example of the in-store layout according to the embodiment;

FIG. 32 is an example in which a store area shown in FIG. 31 is subdivided;

FIG. 33 is a flowchart showing a processing procedure of the control section executed when a behavior analysis business of the flow line analysis menu is selected according to the embodiment;

FIG. 34 is a flowchart showing the processing procedure of the control section executed when the behavior analysis business of the flow line analysis menu is selected according to the embodiment;

FIG. 35 is a diagram showing an area configuration of an output list table prepared by the flow line analysis apparatus according to the present embodiment; and

FIG. 36 is a diagram illustrating a method for calculating customer behavior data according to the embodiment.

An embodiment of the present invention will now be described with reference to the accompanying drawings.

According to present embodiment, the invention is applied to a flow line analysis apparatus that analyzes the behavior of a customer based on the flow line data of the customer moving in a store and the customer's transaction data. The flow line data represents a path along which the customer moves in the store. The transaction data indicates the contents of transactions, such as merchandise purchased by the customer, purchase amount, etc.

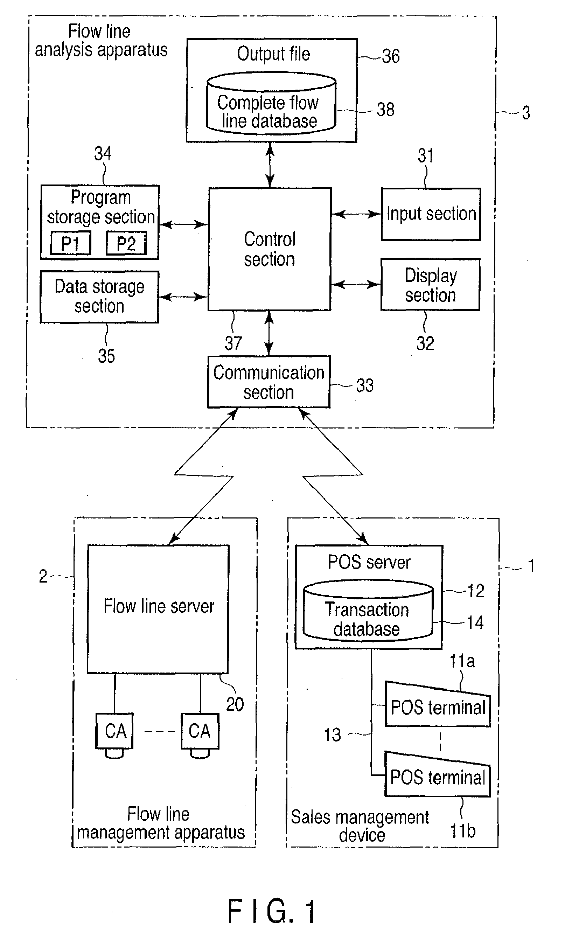

As shown in the block diagram of FIG. 1, a flow line control system of the present embodiment is composed of a sales management apparatus 1, flow line management apparatus 2, and flow line analysis apparatus 3. These apparatuses 1, 2 and 3 are connected to one another for two-way communication by a computer-to-computer network.

The sales management apparatus 1 is composed of a plurality of POS terminals 11 and one POS server 12. Each POS terminal 11 is connected to the POS server 12 by a communication line 13, such as a local area network (LAN). The POS server 12 functions as a host system of each POS terminal 11. In the present embodiment, the POS terminals 11 are regarded as two in number for convenience of description. One of the POS terminals is denoted by number 11a, and the other by number 11b. The sales management apparatus 1 constructed in this manner is generally called a POS system.

Each of the POS terminals 11 functions as a settlement terminal. Specifically, each POS terminal 11 processes the sales data of merchandise purchased by customers and settles transactions between the customers and the store. Each POS terminal 11 creates transaction data each time a transaction is settled. The transaction data created by each POS terminal 11 is transmitted to the POS server 12 through the communication line 13. The POS server 12 stores the transaction data transmitted from each POS terminal 11 in a transaction database 14.

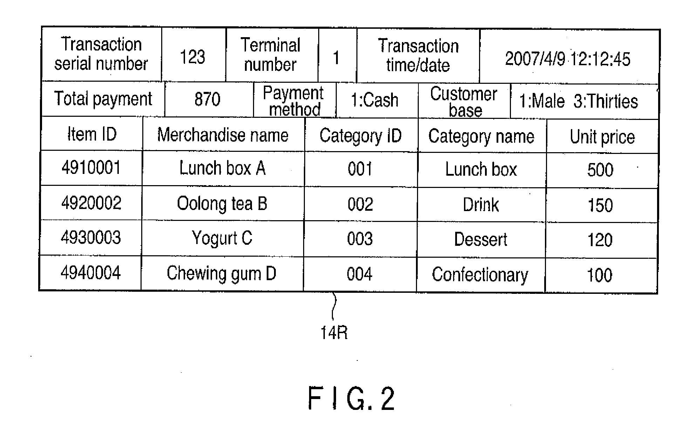

FIG. 2 shows an example of the configuration of a record of transaction data stored in the transaction database 14. As shown in FIG. 2, the transaction data includes specification information (item ID, article name, category ID, category name, and unit price) for the merchandise purchased by customers, transaction serial number, terminal number, transaction date/time, total payment, payment section, and customer base.

The item ID is a unique code for each article to be discriminated from others. The terminal number is set to a unique value for each terminal in order to discriminate the individual POS terminals 11a and 11b. The payment section is data for the classification of the method of payment, e.g., cash payment or credit card payment. The customer base is data for the classification of the customer's sex and age.

The transaction date/time is the date/time when a transaction is initiated in a POS terminal 11, which incorporates a clock IC. Upon input of the merchandise data for the customer's first purchase, the date/time measured by the clock IC is set as the transaction date/time in the transaction data. Incidentally, the transaction date/time is not necessarily the point in time when the transaction is initiated but may be the point in time when the transaction is settled. Specifically, it may be the time point when a checkout key, such as a deposit/cash key, is operated.

Each transaction data can be uniquely identified by a combination of a terminal number, transaction date/time, and transaction serial number. Specifically, data composed of the terminal number, transaction date/time, and transaction serial number functions as an ID for each transaction data. This data will hereinafter be referred to as the "transaction ID".

The flow line management apparatus 2 is composed of a plurality of cameras CA and a flow line server 20.

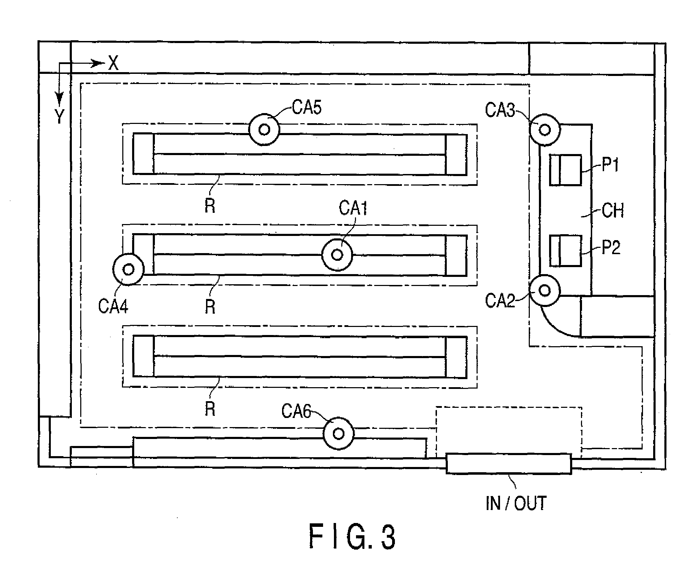

Of the cameras CA, as shown in the interior plan view of FIG. 3, one camera (CA1) is disposed on a ceiling in a central portion of a store, two cameras (CA2 and CA3) are disposed on the ceiling near a checkout counter CH where POS terminals 11a and 11b are placed, and three cameras (CA4, CA5, and CA6) are disposed on the ceiling at three positions on an inner side of the store and right- and left-wall sides with respect to the checkout counter CH.

Of these cameras, the cameras CA1, CA2, and CA3 are cameras each using a fish-eye lens, i.e., so-called fish-eye cameras, and the cameras CA4, CA5, and CA6 are cameras each having an omnidirectional mirror, i.e., so-called omnidirectional cameras.

It is to be noted that the number of cameras is not restricted to six, and it may be three, four, five or seven or above. Further, combinations of the fish-eye cameras and the omnidirectional cameras are not restricted to a pattern in the present embodiment, and they can be arbitrarily changed.

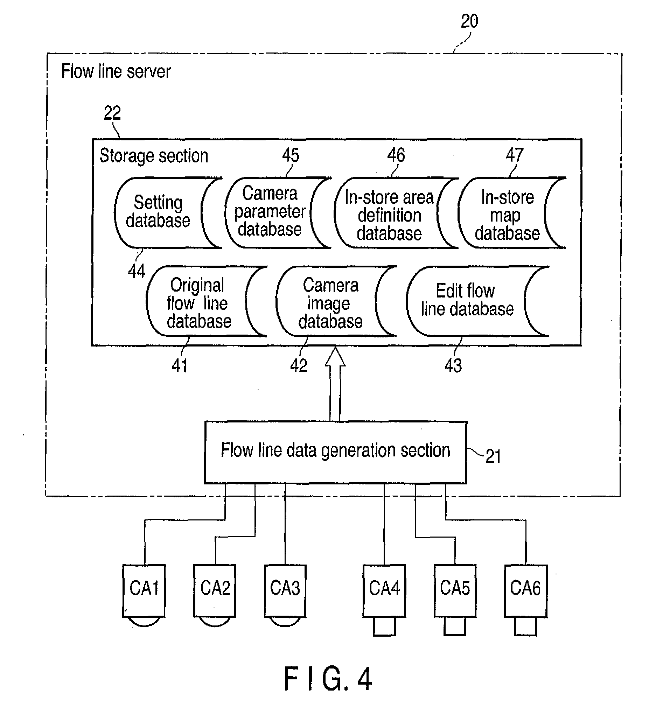

As shown in the block diagram of FIG. 4, the flow line server 20 is composed of a flow line data generation section 21 and a storage section 22.

The flow line data generation section 21 extracts camera-specific frame images in a fixed cycle from pictures taken by the respective cameras CA1 to CA6. Furthermore, the extracted camera-specific frame images obtained with the same timing are analyzed. If a moving body is detected as a result, the flow line data generation section 21 traces this moving body as a target.

The flow line data generation section 21 adds a target ID as an intrinsic identifier to a moving body every time the new moving body is detected. The flow line data generation section 21 generates original flow line data for individual frames based on the target ID and information obtained by tracing the moving body.

In the present embodiment, the target ID is a serial number which is incremented by one starting from zero for convenience's sake. Moreover, a cycle of extracting each frame image is 1/15 second. This cycle can be changed. For example, when more detailed flow line data is required, shortening the cycle to, e.g., 1/30 second can suffice. When a file capacity of an original flow line database 41 must be reduced, increasing the cycle to, e.g., 1/10 second can suffice.

The storage section 22 stores various databases. For example, a hard disk drive is used as the storage section 22. The storage section 22 is formed with a camera image database 42, edit flow line database 43, setting database 44, camera parameter database 45, in-store area definition database 46, and in-store map database 47, as well as with the original flow line database 41.

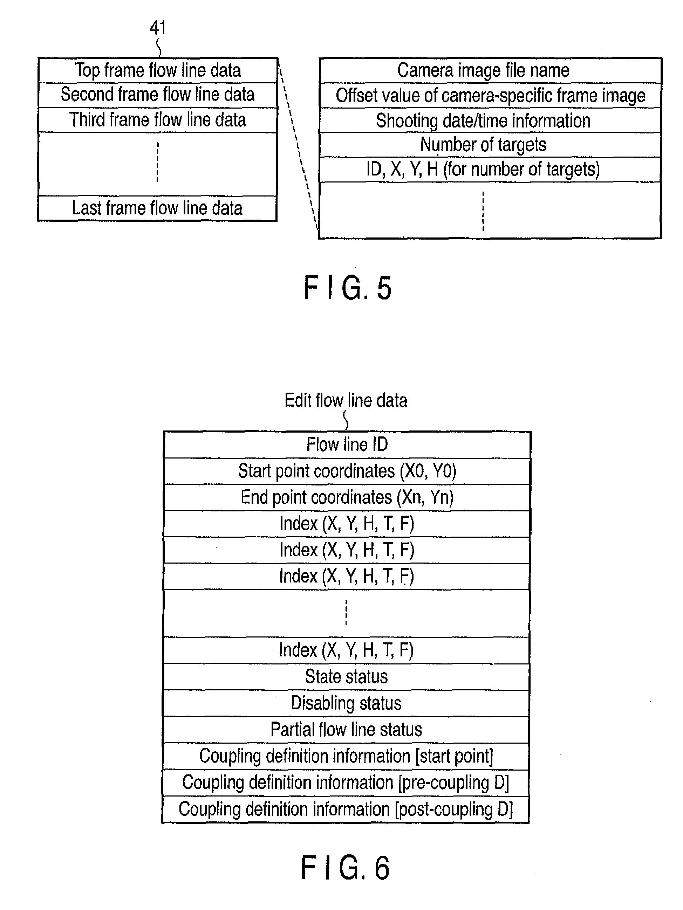

As shown in FIG. 5, the original flow line database 41 is successively stored with original flow line data for the individual frames generated in the flow line data generation section 21. The original flow line data is composed of a camera image file name, offset value, shooting date/time information, number of targets, and target information (ID, X, Y, H) for the number of targets.

The frame images extracted from the pictures taken by the cameras CA1 to CA6 with the same timing are stored in one camera image file. Different offset values are applied individually to the frame images. The file name of this camera image file and the respective offset values of the frame images are incorporated into the original flow line data based on the frames.

The flow line data generation section 21 detects a moving body from each frame image. An intrinsic target ID is given to the moving body. Additionally, a position of the moving body is calculated in a three-dimensional world coordinate system (X, Y, H).

In the plan view of FIG. 3 showing the inside of a store, according to the present embodiment, a corner on the left inner side is determined as an original point (0, 0) of an X axis and Y axis, and its floor is determined as an original point of an H (Height) axis. The number of moving bodies detected from the frame images extracted with the same timing, i.e., a so-called number of targets, shooting date/time of each of the frame images, target information of each moving body (ID, X, Y, H) is incorporated in original flow line data generated in accordance with each frame image.

The camera image database 42 stores a camera image file. The camera image file stores respective frame images extracted at the same hour from pictures taken by the cameras CA1 to CA6 in accordance with each of the cameras CA1 to CA6.

The edit flow line database 43 stores edit flow line data. The edit flow line data is generated based on the original flow line data in accordance with each moving body. FIG. 6 shows a data configuration of the edit flow line data. As shown in FIG. 6, the edit flow line data is composed of an intrinsic flow line ID, start point coordinates, end point coordinates, a plurality of pieces of index information, various kinds of status information, and various kinds of coupling definition information.

The start point coordinates are two-dimensional coordinates (X0, Y0) indicative of a start point of a flow line specified by a flow line ID. The end point coordinates are two-dimensional coordinates (Xn, Yn) indicative of an end point of this flow line. The index information is generated in accordance with each frame image. One piece of index information includes in-store coordinates (X, Y, H) of a flow line specified by a flow line ID, shooting date/time information T of a frame image, and change point flag F. There are three types of status information, i.e., a state status, disabling status, and partial flow line status. There are three types of coupling definition information, i.e., start point information, pre-coupling ID, and post-coupling ID.

The setting database 44 stores various kinds of setting data required for a flow line editing operation in advance.

The camera parameter database 45 stores various kinds of parameter data concerning the fish-eye cameras CA1 to CA3 and various kinds of parameter data concerning the omnidirectional cameras CA4 to CA6.

The in-store area definition database 46 stores data required to define an area of the in-store in advance. In the present embodiment, the in-store is divided into an entrance area, disabled area, and sales area.

In FIG. 3, the entrance area is a rectangular area surrounded by a broken line on the in-store side from an entrance/exit IN/OUT. Two-dimensional coordinates (X, Y) of this entrance area are stored as entrance area definition data in the in-store area definition database 46.

The disabled area is an area where customers cannot walk around for shopping. In FIG. 3, areas where store shelves R are installed and an inner area of the checkout counter CH correspond to the disabled area. Two-dimensional coordinates (X, Y) in this disabled area are stored as disabled area definition data in the in-store area definition database 46.

The sales area is an area where customers walk around for shopping. An area obtained by eliminating the entrance area and the disabled area from the inside of the store corresponds to the sales area. Two-dimensional coordinates (X, Y) in this sales area are stored as sales area definition data in the in-store area definition database 46.

The in-store map database 47 stores image data of an in-store map which is similar to the in-stores plan view depicted in FIG. 3 in advance.

The flow line analysis apparatus 3 is composed of an input section 31, display section 32, communication section 33, program storage section 34, data storage section 35, output file 36, and control section 37. An input device, such as a keyboard or mouse, is used for the input section 31. A display device, such as a liquid crystal display or CRT display, is used for the display section 32. The communication section 33 serves as an interface between the POS server 12 and flow line server 20. The program storage section 34 is formed of a read-only memory (ROM). The data storage section 35 is formed of a random access memory (RAM). The output file 36 is formed of a recording medium, such as a hard disk or magneto-optical disk. The control section 37 consists mainly of a central processing unit (CPU). The flow line analysis apparatus 3 is realized by computer equipment, such as a personal computer.

The program storage section 34 is stored with a flow line editing program P1 and flow line analysis program P2.

The store shelves R and others are placed in the store. Therefore, a moving body may be hidden behind the shelf so that the moving body cannot be traced as a target in the middle of a process in some cases. Further, a plurality of moving bodies may overlap so that the moving body cannot be traced as a target. Once the tracing of the moving body is interrupted, the flow line management apparatus 2 applies a different flow line ID for control to the same customer.

The flow line analysis apparatus 3 has a function to extract a plurality of flow line data generated for the same customer and edit a complete flow line that connects an entrance and exit. Further, the flow line analysis apparatus 3 has a function to analyze the customer's behavior from the entrance to exit. The former function is fulfilled by the flow line editing program P1. The latter function is fulfilled by the flow line analysis program P2.

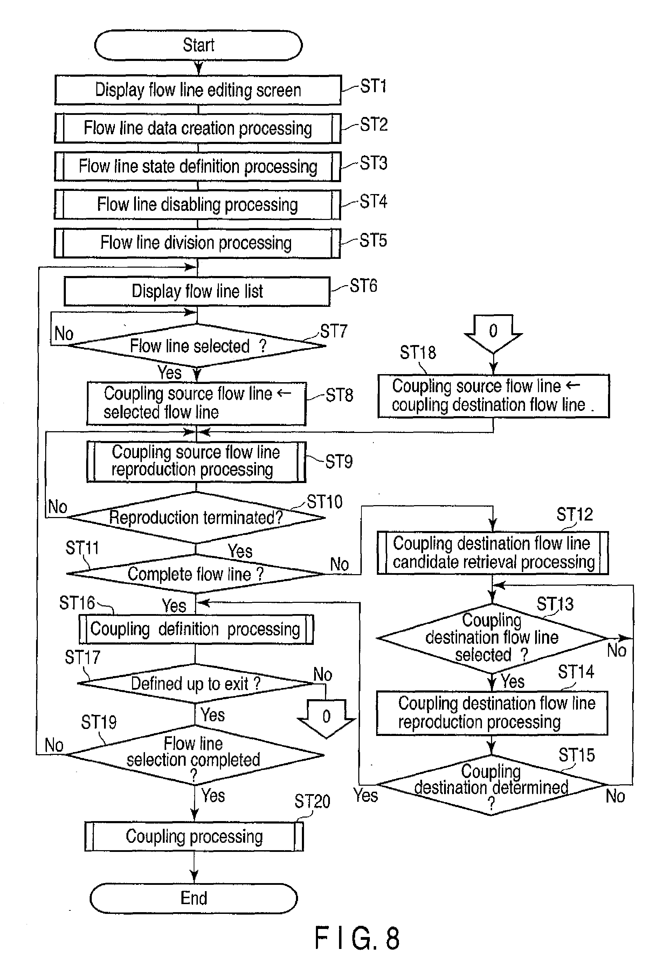

If an operator gives a command to start a flow line editing business, the flow line editing program P1 is activated. If the flow line editing program P1 is activated, the control section 37 is connected to the flow line server 20 through the communication section 33. Then, the databases 41 to 47 in the storage section 22 of the flow line server 20 are suitably accessed in accordance with the flow line editing program P1, and the following flow line editing processing is executed. The procedure of this processing is shown in the flowchart of FIG. 8.

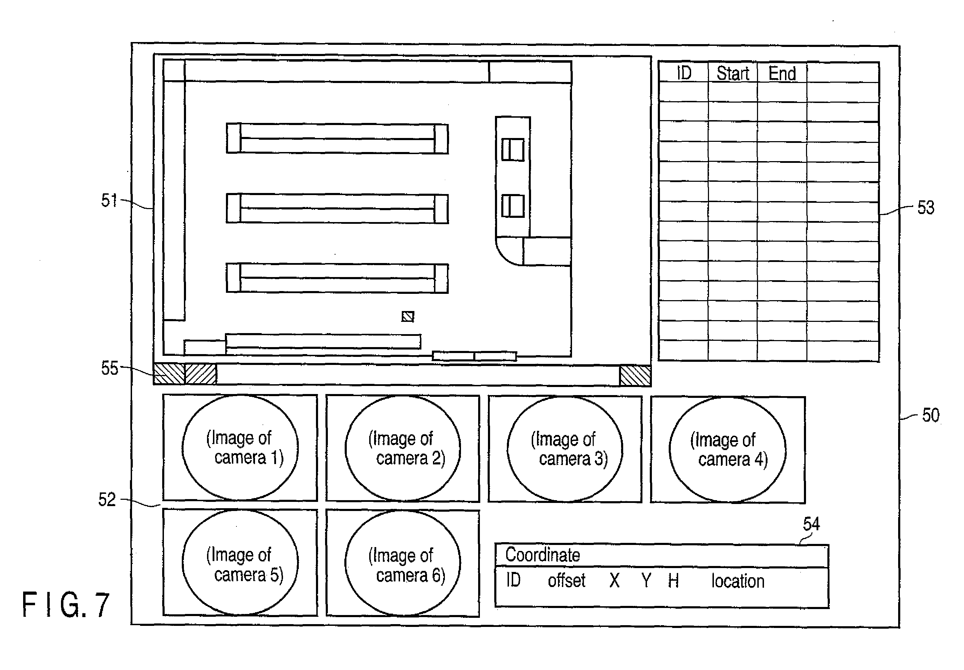

The control section 37 displays a flow line editing screen 50 in the display section 32 in Step ST1. FIG. 7 shows an example of the flow line editing screen 50. As shown in FIG. 7, the flow line editing screen 50 is divided into a flow line display section 51, camera image display section 52, flow line list display section 53, and coordinate display section 54.

The flow line display section 51 shows a plan view of an in-store map based on image data stored in the in-store map database 47. A scroll bar 55 is provided in the flow line display section 51. The scroll bar 55 is synchronized with a shooting time of each of the cameras CA1 to CA6. When the operator slides the scroll bar 55 from a left end toward a right end in the screen, a shooting time passes. Furthermore, coordinates of a moving body detected from frame images shot by the respective cameras CA1 to CA6 are superimposed and displayed on the in-store map as a flow line.

The camera image display section 52 shows images shot by the respective cameras CA1 to CA6 within a time specified by the scroll bar 55. As shown in the drawing, images of the six cameras CA1 to CA6 can be simultaneously displayed in alignment. Moreover, one or more camera images selected from these images can be expanded to be displayed.

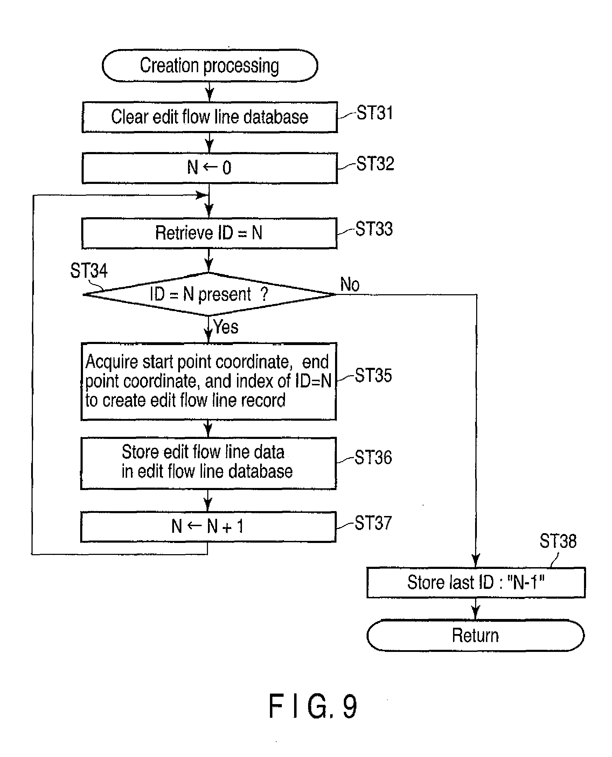

After displaying the flow line editing screen 50, the control section 37 executes flow line data creation processing in Step ST2. A flowchart of FIG. 9 shows a procedure of this creation processing.

First, the control section 37 clears the edit flow line database 43 in Step ST31. Then, the control section 37 presets a count value N in a number counter to zero in Step ST32. This preset value zero is an initial value of a target ID that is given every time a new moving body is detected in the flow line data creation section 21.

After presetting the count value N of the number counter to zero, the control section 37 retrieves original flow line data having target information in which a target ID is N (N is a value of the number counter) from the original flow line database 41 in Step ST33.

When one or more pieces of relevant original flow line data can be detected (YES in Step ST34), the control section 37 generates edit flow line data having the target ID N as a flow line ID in Step ST35. Additionally, start point coordinates (X0, Y0), end point coordinates (Xn, Yn), and index information (X, Y, H, T, F) are incorporated into this edit flow line data.

Specifically, the control section 37 acquires target information having the target ID N from all the pieces of original flow line data detected from the original flow line database 41. Further, two-dimensional coordinates (X, Y) of target information acquired from original flow line data having the oldest shooting date/time are incorporated as the start point coordinates (X0, Y0) of the edit flow line data. Furthermore, two-dimensional coordinates (X, Y) of target information acquired from original flow line data having the latest shooting date/time are incorporated as the end point coordinates (Xn, Yn) of the edit flow line data. Moreover, three-dimensional coordinates (X, Y, H) and shooting date/time information T of target information acquired from each original flow line data are incorporated as index information of the edit flow line data in chronological order of shooting date/time. It is to be noted that the change point flag F of each index information is reset.

When the edit flow line data having a flow line ID N is created, the control section 37 stores this edit flow line data in the edit flow line database 43 in Step ST36. Then, the control section 37 increments the number counter by 1 in Step ST37. Additionally, the processing of Steps ST33 to ST37 is executed again.

The control section 37 repeats the processing of Steps ST33 to ST37 while the original flow line data having the target information (ID, X, Y, H) with the target ID N can be detected from the original flow line database 41. As a result, edit flow line data in which a value of the flow line ID is incremented by 1 is generated based on the original flow line data in the original flow line database 41 and stored in the edit flow line database 43.

When the original flow line data having the target information with the target ID N cannot be detected from the original flow line database 41 at all in Step ST34, the control section 37 stores a value N-1 obtained by subtracting 1 from the count value N of the number counter in the storage section 24 as a last flow line ID in Step ST38. Then, the flow line data creation processing is terminated (flow line generating means).

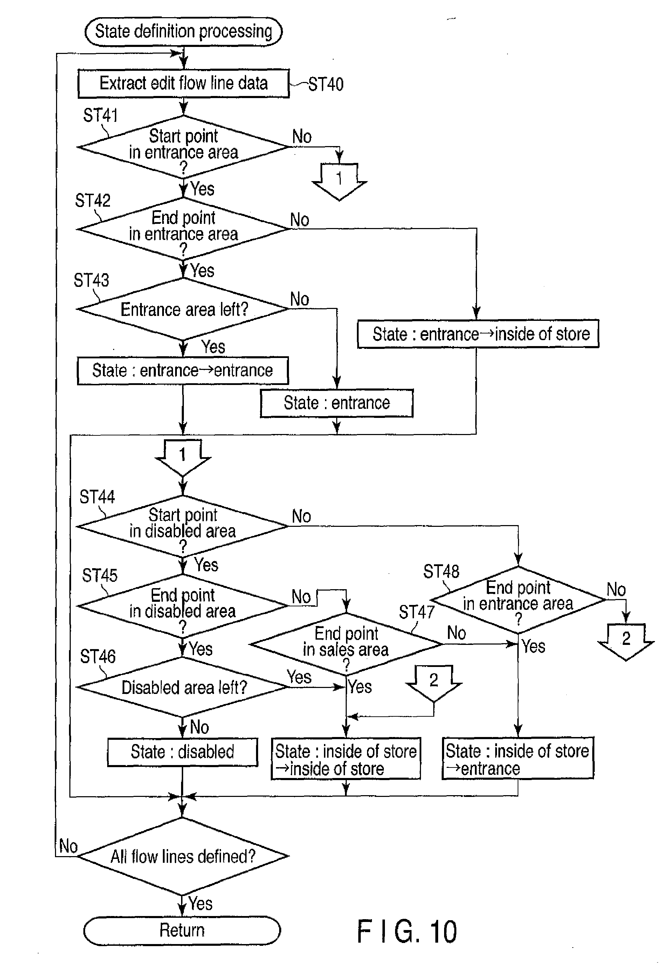

When the flow line data creation processing is terminated, the control section 37 subsequently executes state definition processing of the flow line in Step ST3. A flowchart of FIG. 10 shows a procedure of this state definition processing.

The control section 37 extracts the respective pieces of edit flow line data one by one from the edit flow line database 43 in, e.g., ascending order of the flow line IDs in Step ST40. Further, the control section 37 sets a state status with respect to each extracted edit flow line data in accordance with the following processing routine.

First, the control section 37 acquires start point coordinates (X0, Y0) from the edit flow line data in Step ST41. Further, the control section 37 makes reference to the in-store area definition database 46 to determine whether or not the start point coordinates (X0, Y0) are coordinates defined as the entrance area. If it is the coordinates of the entrance area, the control section 37 acquires end point coordinates (Xn, Yn) from the edit flow line data in Step ST42. Furthermore, the control section 37 makes reference to the in-store area definition database 46 to determine whether or not the end point coordinates (Xn, Yn) are also coordinates in the entrance area.

If the end point coordinates (Xn, Yn) are also the coordinates of the entrance area, the control section 37 checks index information of the edit flow line data in chronological order of shooting date/time. As a result, when the index information including coordinates other than the coordinates in the entrance area is detected, a moving body corresponding to this edit flow line data has once exited the entrance area and then returned to the entrance area. In this case, the control section 37 sets the state status to "entrance→entrance".

When the index information including coordinates other than the coordinates in the entrance area is not detected at all in Step ST43, a moving body corresponding to this edit flow line data has not exited the entrance area. In this case, the control section 37 sets the state status to "entrance".

When the end point coordinates (Xn, Yn) are not the coordinates in the entrance area in Step ST42, the end point coordinates (Xn, Yn) are defined as the sales area or the disabled area. In this case, the control section 37 sets the state status to "entrance→inside of store".

When the start point coordinates (X0, Y0) are not the coordinates in the entrance area in Step ST41, the control section 37 determines whether or not the start point coordinates (X0, Y0) are coordinates defined as the disabled area in Step ST44. When it is the coordinates in the disabled area, the control section 37 acquires the end point coordinates (Xn, Yn) from the edit flow line data in Step ST45. Moreover, the control section 37 makes reference to the in-store area definition database 46 to determine whether or not the end point coordinates (Xn, Yn) are coordinates in the disabled area.

When the end point coordinates (Xn, Yn) are the coordinates in the disabled area, the control section 37 checks index information of the edit flow line data in chronological order of shooting date/time in Step ST46. As a result, when the index information including coordinates other than the coordinates in the disabled area is not detected at all, a moving body corresponding to this edit flow line data has not exited the disabled area. In this case, the control section 37 sets the state status to "disabled".

When the index information including the coordinates other than the coordinates in the disabled area is detected in Step ST46, a moving body corresponding to this edit flow line data has once exited the disabled area and returned to the disabled area. In this case, the control section 37 sets the state status to "inside of store→inside of store".

When the end point coordinates (Xn, Yn) are not the coordinates in the disabled area in Step ST45, the control section 37 makes reference to the in-store area definition database 46 to determine whether or not this end point coordinates (Xn, Yn) are coordinates in the sales area in Step ST47.

When the end point coordinates (Xn, Yn) are the coordinates in the sales area, the control section 37 sets the state status to "inside of store→inside of store". On the other hand, when the end point coordinates (Xn, Yn) are not the coordinates in the sales area, the end point coordinates (Xn, Yn) are coordinates in the entrance area. In this case, the control section 37 sets the state status to "inside of store→entrance".

When the start point coordinates (X0, Y0) are not the coordinates in the disabled area in Step ST44, the start point coordinates (X0, Y0) are coordinates in the sales area. In this case, the control section 37 acquires the end point coordinates (Xn, Yn) from the edit flow line data. Additionally, the control section 37 makes reference to the in-store area definition database 46 to determine whether or not this end point coordinates (Xn, Yn) are coordinates in the entrance area in Step ST48.

When the end point coordinates (Xn, Yn) are the coordinates in the entrance area, the control section 37 sets the state status to "inside of store→entrance". On the other hand, when the end point coordinates (Xn, Yn) are not the coordinates in the entrance area, the end point coordinates (Xn, Yn) are coordinates in the sales area or the disabled area. In this case, the control section 37 sets the state status to "inside of store→inside of store".

The control section 37 executes the above-explained processing routine with respect to all the pieces of edit flow line data stored in the edit flow line database 43. Therefore, any one of the state statuses, i.e., "entrance→entrance", "entrance", "entrance→ainside of store", "inside of store→entrance", "inside of store→inside of store", and "disabled" is set with respect to each edit flow line data. Here, the control section 37 constitutes a flow line defining section.

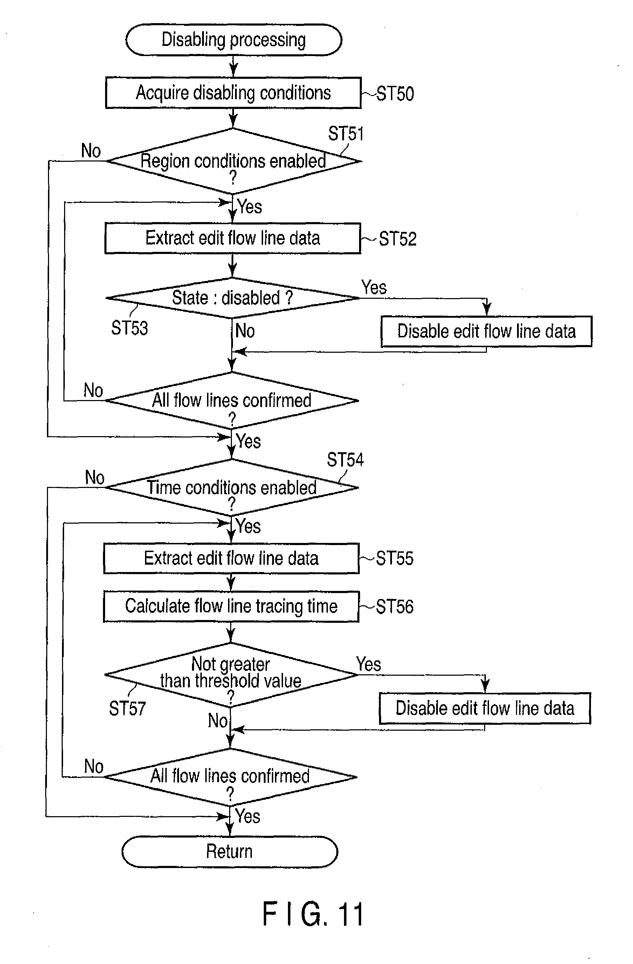

When the state definition processing for the flow line is terminated, the control section 37 subsequently executes disabling processing for the flow line in Step ST4. A flowchart of FIG. 11 shows a procedure of this disabling processing.

The control section 37 acquires setting data of disabling conditions from the setting database 44 in Step ST50. As the disabling conditions, there are region conditions and time conditions. The region conditions disable a flow line data whose starting position (a start point) or ending position (an end point) is present in the disabled area. The time conditions disable a flow line data whose tracing time for a flow line is less than or equal to a preset threshold value. Whether these conditions are enabled is set in accordance with respective conditions by the operator in advance. The setting database 44 as a judgment condition storage section stores setting data of the disabling conditions.

The control section 37 that has acquired the setting data of the disabling conditions first determines whether or not the region conditions are enabled in Step ST51. When the region conditions are not enabled, the control section 37 advances to processing in Step ST54.

When the region conditions are enabled, the control section 37 extracts respective pieces of edit flow line data one by one from the edit flow line database 43 in Step ST52, and checks state statuses of these pieces of data. When the state status of each data is "disabled" (YES in Step ST53), the control section 37 sets a disabling status of this edit flow line data to ON. When the state status is not "disabled" (NO in Step ST53), the disabling status remains OFF. The edit flow line data having the disabling status changed to ON is disabled. The disabled edit flow line data is not processed in a procedure of subsequent editing processing.

When checking the state statuses of all the pieces of edit flow line data in the edit flow line database 43 is terminated, the control section 37 advances to processing of Step ST54. Specifically, the control section 37 determines whether or not the time conditions are enabled. When the time conditions are not enabled, the disabling processing is terminated.

When the time conditions are enabled, the control section 37 extracts respective pieces of edit flow line data one by one from the edit flow line database 43 in Step ST55. Further, the control section 37 calculates a flow line tracing time in Step ST56. Specifically, the control section 37 calculates an elapsed time from shooting date/time information T of top index information of the edit flow line data to shooting date/time information T of last index information of the same.

Then, the control section 37 compares this flow line tracing time with a preset threshold value in Step ST57 (a comparison section). The threshold value is set in the setting database 44 by the operator in advance. The control section 37 determines whether the flow line tracing time is less than or equal to the threshold value (the judgment section).

When the flow line tracing time is less than or equal to the threshold value (YES in Step ST57), the control section 37 sets a disabling status of this edit flow line data to ON. When the flow line tracing time is longer than the threshold value (NO in Step ST57), the disabling status remains OFF.

When checking the flow line tracing times of all the pieces of edit flow line data in the edit flow line database 43 is terminated, the disabling processing is terminated.

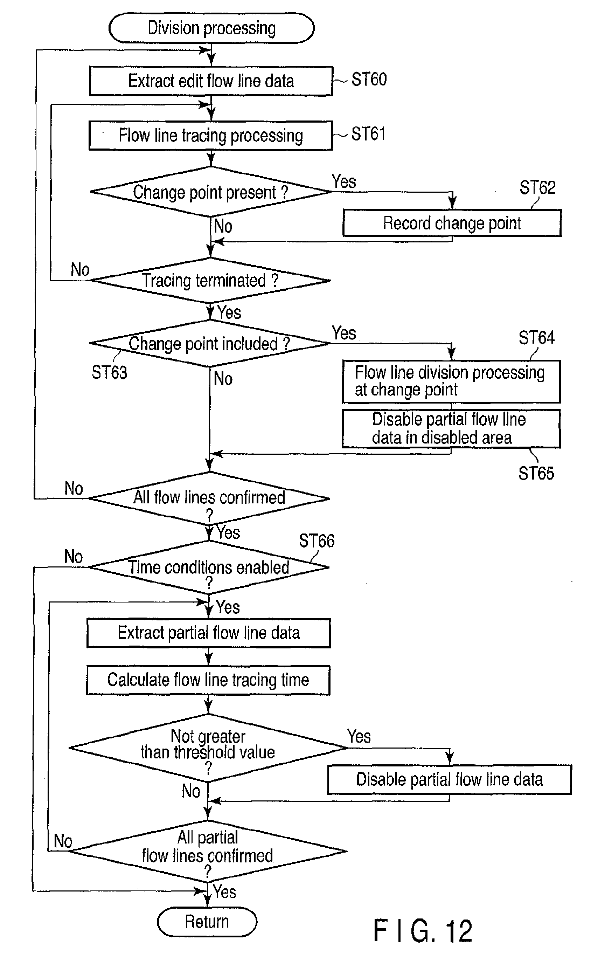

When the flow line disabling processing is terminated, the control section 37 then executes division processing for the flow line in Step ST5. A flowchart of FIG. 12 shows a procedure of this division processing.

The control section 37 extracts respective pieces of edit flow line data each having the disabling status not set to ON one by one from the edit flow line database 43 in Step ST60. Furthermore, the control section 37 executes the division processing with respect to each extracted edit flow line data in accordance with the following processing routine.

First, the control section 37 executes flow line tracing processing in Step ST61. Specifically, the control section 37 acquires index information from the edit flow line data in chronological order of shooting date/time. Moreover, the control section 37 collates three-dimensional coordinates (X, Y, H) of each index information with coordinates in each area defined in the in-store area definition database 46 to detect index information having coordinates in the disabled area changed from coordinates in the entrance area or the sales area every time the index information is acquired. Alternatively, the control section 37 detects index information having coordinates in the entrance area or the sales area changed from coordinates in the disabled area. When corresponding index information is detected, the control section 37 sets a change point flag F with respect to this index information in Step ST62. In this manner, a change point is recorded in the edit flow line data.

Then, the control section 37 determines whether or not the change point has been recorded in the edit flow line data in Step ST63. When index information having the change point flag set thereto is present, the change point has been recorded. In this case, the control section 37 executes flow line division processing at this change point in Step ST64. This division processing is executed based on the following procedure.

First, the control section 37 adds a copy of the edit flow line data to the edit flow line database 43. Subsequently, the control section 37 adds 1 to the last flow line ID. The last flow line ID is stored in the storage section 24 in Step ST38 of the flow line data creation processing. The control section 37 determines the last flow line ID as a flow line ID of the copied edit flow line data (which will be referred to as a copy destination flow line data hereinafter).

Subsequently, the control section 37 sequentially checks index information of the copy destination flow line data from the top. Furthermore, when index information having the change point flag set thereto is detected, the top index information to index information immediately before the index information having the change point flag set thereto are deleted. As a result, the index information having the change point flag set thereto becomes the top index information of the copy destination flow line data. The control section 37 resets the change point flag of this top index information. Moreover, two-dimensional coordinates (X, Y) of the top index information are determined as start point coordinates (X0, Y0) of the copy destination flow line data.

Then, the control section 37 executes the same processing as the state definition processing with respect to the copy destination flow line data to redefine the state status of the copy destination flow line data. When the state definition processing is terminated, the control section 37 sets a partial flow line status of the copy destination flow line data to ON. Specifically, the copy destination flow line data is defined as partial flow line data.

The control section 37 executes the following processing with respect to the edit flow line data as a copy source (which will be referred to as copy source flow line data hereinafter).

First, the control section 37 sequentially checks index information of the copy source flow line data from the top. Moreover, if index information having the change point flag set thereto is detected, all the pieces of index information following this index information are deleted. Then, the control section 37 determines two-dimensional coordinates of index information having the latest shooting date/time in the remaining pieces of index information after deletion as end point coordinates (Xn, Yn) of the copy source flow line data.

Subsequently, the control section 37 executes the same processing as the state definition processing with respect to the copy source flow line data to redefine the state status of the copy source flow line data. When the state definition processing is terminated, the control section 37 sets the partial flow line status of the copy source flow line data to ON. Specifically, the copy source flow line data is defined as partial flow line data.

With the above-described processing, the edit flow line data having the change point is divided into the partial flow line data before the change point (the copy source flow line data) and the partial flow line data after the change point (the copy destination flow line data).

Then, the control section 37 determines whether or not the copy destination flow line data has a further change point. Moreover, when the copy destination flow line data has a further change point, the above-explained flow line division processing is executed again.

Thereafter, the control section 37 repeats the flow line division processing until the copy destination flow line data no longer has a change point. Thus, the edit flow line data having the change point is divided into a plurality of pieces of partial flow line data having no change point.

When the flow line division processing is terminated, the control section 37 disables the partial flow line data in the disabled area from the respective pieces of partial flow line data in Step ST65. Specifically, the control section 37 checks the state status of each partial flow line data. Additionally, when the partial flow line data having the state status set to "disabled" is detected, the disabling status of this partial flow line data is set to ON.

When the respective pieces of processing of Steps ST61 to ST65 have been executed with respect to all the pieces of edit flow line data extracted from the edit flow line database 43, the control section 37 determines whether or not the time conditions are enabled as the disabling conditions in Step ST66. When the time conditions are not enabled, this division processing is terminated.

If the time conditions are enabled, the control section 37 extracts respective pieces of partial flow line data each having the disabling status not set to ON one by one from the edit flow line database 43. Further, the control section 37 executes the disabling processing for the time conditions with respect to each extracted partial flow line data. Specifically, the control section 37 calculates a flow line tracing time of the partial flow line data. Furthermore, the control section 37 determines whether the flow line tracing time is less than or equal to a threshold value. When the flow line tracing time is less than or equal to the threshold value, the control section 37 sets the disabling status of this partial flow line data to ON.

When the above-explained processing is executed with respect to all the pieces of partial flow line data extracted from the edit flow line database 43, the division processing for the flow line is terminated.

When the division processing is executed, defining information of each non-disabled edit flow line data stored in the edit flow line database 43 is set to any one of "entrance", "entrance→entrance", "entrance→inside of store", "inside of store→inside of store", and "inside of store→entrance".

When the division processing for flow line is terminated, the control section 37 extracts all pieces of enabled edit flow line data each having the disabling status not set to ON from the edit flow line database 43 in Step ST6. Furthermore, the control section 37 creates a flow line list showing flow line IDs, start point coordinates, and end point coordinates of the respective pieces of extracted edit flow line data. The flow line list is displayed in the flow line list display section 53.

Then, the control section 37 waits until a coupling source flow line data is selected from the flow line list in Step ST7.

The operator manipulates the input section 31 to select an ID of a flow line as a coupling source flow line data from the flow line list. When the flow line ID is selected, the control section 37 stores this selected flow line ID as an ID of the coupling source flow line in Step ST8.

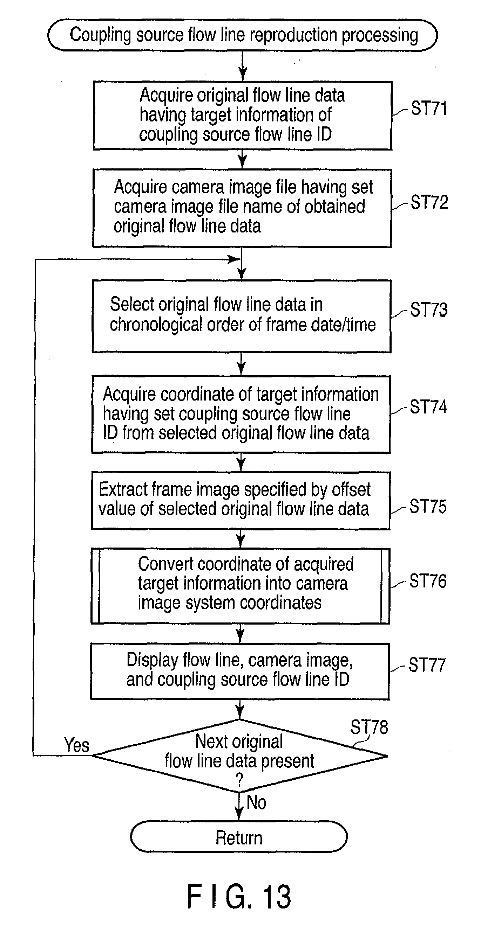

Subsequently, the control section 37 executes coupling source flow line reproduction processing in Step ST9. A flowchart of FIG. 13 shows a procedure of this reproduction processing.

First, the control section 37 sequentially searches the original flow line database 41 starting from original flow line data in a top frame in Step ST71. Further, the control section 37 acquires all pieces of original flow line data each having target information in which a target ID matches with the coupling source flow line ID.

Then, the control section 37 acquires a camera image file name from each acquired original flow line data in Step ST72. Furthermore, the control section 37 acquires all camera image files to which this file name is set from the camera image database 42.

Subsequently, the control section 37 compares shooting date/time information of the respective pieces of acquired original flow line data in Step ST73. Moreover, it selects the original flow line data in chronological order of shooting date/time information and executes the following processing.

First, the control section 37 acquires three-dimensional coordinates (X, Y, H) of target information whose target ID matches with the coupling source flow line ID from the selected original flow line data in Step ST74. These three-dimensional coordinates are in a world coordinate system.

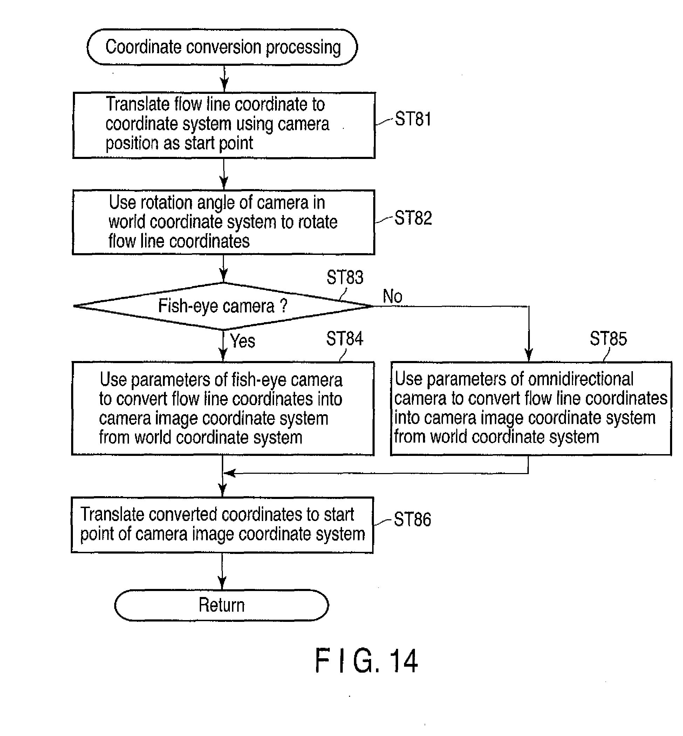

Then, the control section 37 extracts a frame image specified by an offset value of the selected original flow line data from the camera image files in Step ST75. Additionally, the control section 37 converts the acquired three-dimensional coordinates in the world coordinate system into three-dimensional coordinates in a camera image system in Step ST76. This conversion processing is executed based on a procedure depicted in a flowchart of FIG. 14 in accordance with each of the cameras CA1 to CA6.

It is to be noted that this conversion processing uses the following parameters previously set in the camera parameter database 45.

· Flow line coordinates in the world coordinate system: x, y, h
· A position of a camera in the world coordinate system: Wx, Wy, Wz
· Coordinates of the center of an image: Cx, Cy

· A camera rotation angle around a coordinate axis in the world coordinate system: Rx, Ry, Rz
· Parameters of the omnidirectional camera: b, c, f
· Parameters of the fish-eye camera: k1, k3, k5, scale

First, the control section 37 translates flow line coordinates (x, y, h) of a conversion target to a coordinate system (X0, Y0, Z0) using a camera position as an original point in Step ST81. This processing is executed based on the following arithmetic expression (1).

$$\begin{pmatrix} X0 \\ Y0 \\ Z0 \end{pmatrix} = \begin{pmatrix} x \\ y \\ h \end{pmatrix} - \begin{pmatrix} Wx \\ Wy \\ Wz \end{pmatrix} \qquad \ldots (1)$$

Then, the control section 37 rotates the translated flow line coordinates (X0, Y0, Z0) by using a camera rotation angle around the coordinate axis in the world coordinate system to match axes of the world coordinate system and the camera coordinate system with each other in Step ST82. This processing is executed based on the following arithmetic expressions (2) to (4).

[Rotation around X Axis]

$$\begin{pmatrix} Xx \\ Yx \\ Zx \end{pmatrix} = \begin{pmatrix} 1 & 0 & 0 \\ 0 & \cos Rx & -\sin Rx \\ 0 & \sin Rx & \cos Rx \end{pmatrix} \begin{pmatrix} X0 \\ Y0 \\ Z0 \end{pmatrix} \qquad \ldots (2)$$

[Rotation around Y Axis]

$$\begin{pmatrix} Xy \\ Yy \\ Zy \end{pmatrix} = \begin{pmatrix} \cos Ry & 0 & \sin Ry \\ 0 & 1 & 0 \\ -\sin Ry & 0 & \cos Ry \end{pmatrix} \begin{pmatrix} Xx \\ Yx \\ Zx \end{pmatrix} \qquad \ldots (3)$$

[Rotation around Z Axis]

$$\begin{pmatrix} Xz \\ Yz \\ Zz \end{pmatrix} = \begin{pmatrix} \cos Rz & -\sin Rz & 0 \\ \sin Rz & \cos Rz & 0 \\ 0 & 0 & 1 \end{pmatrix} \begin{pmatrix} Xy \\ Yy \\ Zx \end{pmatrix} \qquad \ldots (4)$$

Subsequently, the control section 37 determines a type of a camera as a processing target in Step ST83. In regard to each of the fish-eye cameras CA1, CA2, and CA3, parameters of the fish-eye camera are used to convert flow line coordinates (Xz, Yz, Zz) from the world coordinate system into a camera image coordinate system in Step ST84. This processing is executed based on the following calculations (5) to (7).
First, Xd=r cos t: Yd=r sin t is assumed.
In this expression, when Yz≥0, the following expression is achieved:

$$t = \arccos\left(\frac{Xz}{\sqrt{Xz^2 + Yz^2}}\right) \qquad \cdots (5)$$

When Yz<0, the following expression is achieved:

$$t = 360° - \arccos\left(\frac{Xz}{\sqrt{Xz^2 + Yz^2}}\right) \qquad \cdots (6)$$

Here, a value of r is obtained by using a Newton method in the following expression (7).

$$\begin{cases} r_{n+1} = r_n - \dfrac{f(r_n) - \theta}{f'(r_n)} \\[2mm] f(r_n) = (k_1 r_n + k_3 r_n^3 + k_5 r_n^5) \times \text{scale} \\[2mm] f'(r_n) = (k_1 + 3k_3 r_n^2 + 5k_5 r_n^4) \times \text{scale} \\[2mm] R = \sqrt{Xn^2 + Yz^2} \\[2mm] \text{When } Zz = 0, \ \theta = 90° \\[2mm] \text{When } Zz < 0, \ \theta = \arccos\left(\dfrac{-R}{Zz}\right) \\[2mm] \text{When } Zz > 0, \ \theta = 180° - \arccos\left(\dfrac{R}{Zz}\right) \end{cases} \qquad \cdots (7)$$

It is to be noted that, in this expression (7), an initial value $r_0$ is 0.0, and a target value is $\theta$. Furthermore, it is considered that convergence is attained when $|r_{n+1}-r_n|<0.01$. A value of r at this moment is used.

On the other hand, in regard to each of the omnidirectional cameras CA4, CA5, and CA6, the parameters of the omnidirectional camera are used to convert the flow line coordinates (Xz, Yz, Zz) from the world coordinate system into the camera image coordinate system in Step ST85. This processing is executed based on the following arithmetic expression (8).

$$\begin{cases} Xd = \dfrac{Xz f(b^2 - c^2)}{(b^2 + c^2)(Zz - c) - 2bc\sqrt{Xz^2 + Yz^2 + (Zz - c)^2}} \\[4mm] Yd = \dfrac{Yz f(b^2 - c^2)}{(b^2 + c^2)(Zz - c) - 2bc\sqrt{Xz^2 + Yz^2 + (Zz - c)^2}} \end{cases} \qquad \cdots (8)$$

When the flow line coordinates are converted into the camera image coordinate system from the world coordinate system in this manner, the control section 37 translates converted coordinates (Xd, Yd) to an original point of the camera image coordinate system in Step ST86. This processing is executed by the following arithmetic expression (9).

$$\begin{pmatrix} X \\ Y \end{pmatrix} = \begin{pmatrix} Xd \\ Yd \end{pmatrix} + \begin{pmatrix} Cx \\ Cy \end{pmatrix} \qquad \cdots \text{ (9)}$$

When the respective pieces of processing of Steps ST81 to ST86 are executed, the three-dimensional coordinates of the target information acquired from the selected original flow line data are converted into the coordinates in the camera image system of each of the cameras CA1 to CA6.

When the three-dimensional coordinates, frame image, and camera image system coordinates are acquired, the control section 37 displays a flow line in the flow line display section 51 in the flow line editing screen 50 based on the three-dimensional coordinates in Step ST77. At the same time, the control section 37 also displays the frame image in the camera image display section 52. Further, it displays the coupling source flow line ID in the camera image display section 52 based on the camera image system coordinates.

Thereafter, the control section 37 determines whether or not original flow line data having the second oldest shooting date/time has been acquired from the original flow line database 41 in Step ST78. When the corresponding original flow line data has been acquired, the control section 37 executes the respective pieces of processing of Steps ST74 to ST78 with respect to this original flow line data. When the original flow line data has not been acquired, this reproduction processing is terminated.

When the coupling source flow line reproduction processing is executed, a flow line selected by the operator from the flow line list is displayed in the flow line display section 51 of the flow line editing screen 50. Furthermore, the camera image display section 52 displays camera images at the same time point in synchronization with the flow line. Moreover, the flow line ID is given to a moving body and displayed in each camera image.

Therefore, comparing the movement of the flow line with the camera images facilitates the operator to see if one customer is traced by this flow. When the flow line is disconnected in the middle of process, moreover, it can be easily determined whether or not a flow line tracing movement of a customer after disconnection is present.

When a flow line tracing movement of the customer after disconnection has been confirmed, coupling this flow line with the flow line before disconnection as one flow line enables creating a complete flow line of one customer. Thus, this coupling operation will now be explained.

It is to be noted that the defining information of enabled edit flow line data stored in the edit flow line database 43 corresponds to one of "entrance", "entrance→entrance", "entrance→inside of store", "inside of store→inside of store", and "inside of store→entrance". Among others, each edit flow line data whose defining information is set to "entrance→entrance" or "entrance" corresponds to a complete flow line tracing a route from entering the store to exiting the store. Furthermore, since the edit flow line data whose defining information is set to "inside of store→entrance" is data indicative of exiting the store, it can be a coupling destination flow line but cannot be a coupling source flow line.

When the coupling source flow line reproduction processing is terminated (YES in Step ST10), the control section 37 determines whether this reproduced coupling source flow line is a complete flow line in Step ST11. Specifically, the control section 37 searches the edit flow line database 43 to acquire edit flow line data having a coupling source flow line ID as a flow line ID. Moreover, a state status of this edit flow line data is checked. Here, when the state status is "entrance→entrance" or "entrance", this flow line can be regarded as the complete flow line. When any other state status is set, this data can be regarded as an incomplete flow line. In case of the complete flow line, the control section 37 proceeds to coupling definition processing in Step ST16.

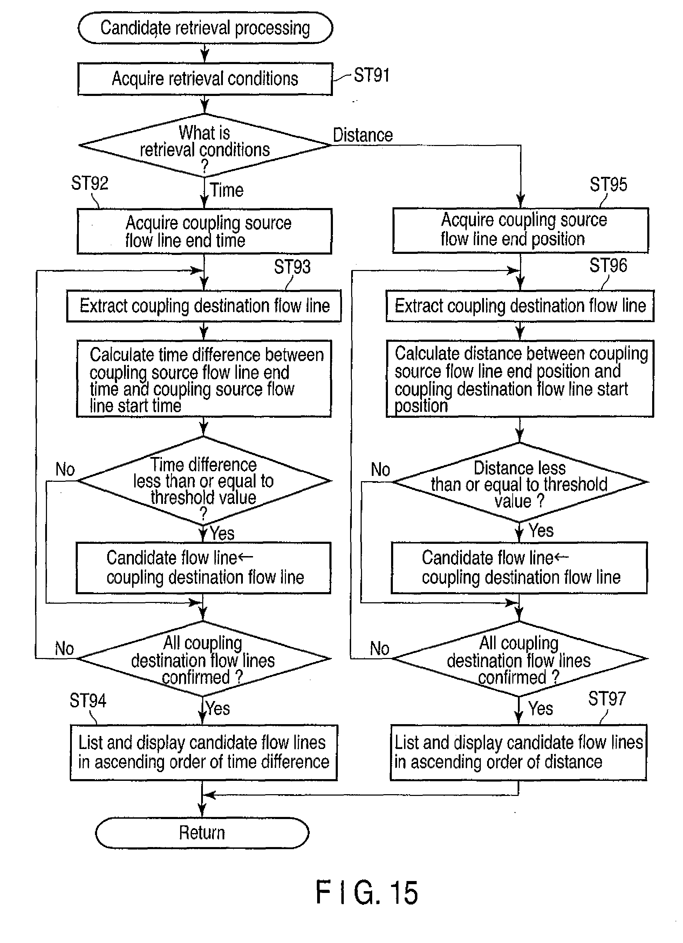

In case of the incomplete flow line, the control section 37 executes coupling destination flow line candidate retrieval processing in Step ST12. A flowchart of FIG. 15 shows a procedure of this retrieval processing.

The control section 37 acquires retrieval conditions from the setting database 44 in Step ST91. As the retrieval conditions, there are "time" and "distance", and one of them is set.

When "time" is set as the retrieval conditions, the control section 37 acquires an end time of a coupling destination flow line in Step ST92. Specifically, it acquires as the end time shooting date/time of index information associated with the last frame from the edit flow line data having the coupling source flow line ID as a flow line ID.

Then, the control section 37 searches the edit flow line database 43 to extract edit flow line data as a candidate for the coupling destination flow line in Step ST93. Edit flow line data whose state status is set to "entrance→inside of store", "inside of store→inside of store", or "inside of store→entrance" is a candidate for the coupling destination flow line. When the edit flow line data as a candidate for the coupling destination flow line is extracted, the control section 37 acquires the shooting date/time of index information associated with the top frame as the start date/time of the coupling destination flow line. Further, a time difference between the start time of the coupling destination flow line and the end time of the coupling source flow line is calculated.

When the time difference is calculated, the control section 37 determines whether the time difference is less than or equal to a preset threshold value. When the time difference is less than or equal to the threshold value, this edit flow line data is left as a coupling destination candidate flow line. When the time difference exceeds the threshold value, this edit flow line data is eliminated as the coupling destination candidate.

When the above-explained processing has been executed with respect to all the pieces of edit flow line data extracted from the edit flow line database 43, the control section 37 creates a coupling destination candidate list in Step ST94. This list includes flow line IDs, start point coordinates, and end point coordinates of respective pieces of edit flow line data remaining as coupling target candidates. The flow line IDs, the start point coordinates, and the end point coordinates are aligned in the list in ascending order of time difference. The coupling destination candidate list is displayed in the flow line list display section 53.

When "distance" is set as the retrieval conditions, the control section 37 acquires an end position of the coupling source flow line in Step ST96. Specifically, the control section 37 acquires end point coordinates from the edit flow line data having the coupling source flow line ID as the flow line ID.

Then, the control section 37 searches the edit flow line database 43 to extract edit flow line data as a candidate for the coupling destination flow line in Step ST96. When the edit flow line data as a candidate for the coupling destination flow line is extracted, the control section 37 acquires start point coordinates of this data as a start point of the coupling destination flow line. Moreover, a distance between the start point of this coupling destination flow line and the flow line end point coordinates of the coupling source flow line is calculated. When the distance is calculated, the control section 37 determines whether this distance is equal to or smaller than a preset threshold value. When the distance is equal to or smaller than the threshold value, this edit flow line data is left as a coupling destination candidate flow line. When the distance exceeds the threshold value, this edit flow line data is eliminated as the coupling destination candidate.

When the processing in Step ST96 and subsequent steps has been executed with respect to all the pieces of edit flow line data extracted from the edit flow line database 43, the control section 37 creates a coupling destination candidate list in Step ST97. This list includes flow line IDs, start point coordinates, and end point coordinates of respective pieces of edit flow line data remaining as coupling destination candidates. In the list, the flow line IDs, the start point coordinates, and the end point coordinates are aligned in ascending order of distance. The coupling destination candidate list is displayed in the flow line list display section 53.

When the coupling destination candidate retrieval processing is terminated, the control section 37 waits for a coupling destination flow line to be selected from the coupling destination candidate list in Step ST13.

The operator manipulates the input section 31 to select an ID of a flow line as a coupling destination flow line from the coupling destination candidate list. When the flow line ID is selected, the control section 37 executes coupling destination flow line reproduction processing in Step ST14. The procedure of this reproduction processing is the same as that of the coupling source flow line reproduction processing illustrated in FIG. 13 except for target flow line data. Therefore, a description of this procedure will be omitted.

When the coupling destination flow line reproduction processing is executed, the flow line display section 51 in the flow line editing screen 50 displays a flow line selected from the coupling destination candidate list by the operator. Further, the camera image display section 52 displays camera images obtained at the same time point in synchronization with the flow line. Furthermore, a flow line ID is displayed in each camera image at a position of a moving body.

Thus, by comparing the movement of the flow line with the camera images, the operator can easily determine whether or not this flow line is a correct coupling destination flow line to be coupled to the coupling source flow line. The operator manipulates the input section 31 to input a decision on the correctness of the coupling destination flow line.

If an input to the effect that the coupling destination flow line is not correct is accepted in Step ST15, the control section 37 returns to Step ST13 and waits for selection of the next coupling destination flow line. If an input to the effect that the coupling destination flow line is correct is accepted, the control section 37 executes the coupling definition processing of Step ST16.

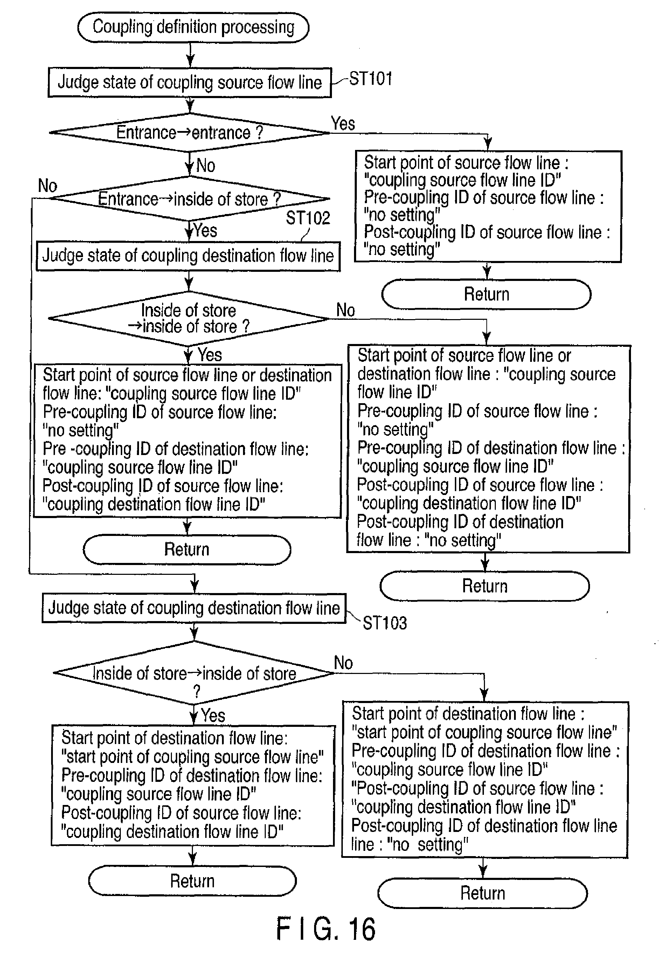

A flowchart of FIG. 16 shows a procedure of the coupling definition processing. The control section 37 judges a state status of the edit flow line data selected as the coupling source flow line in Step ST101.

When the state status of the coupling source flow line is "entrance→entrance" or "entrance", the coupling source flow line is a complete flow line. In this case, the control section 37 determines start point of the edit flow line data selected as the coupling source flow line as a "coupling source flow line ID". Both a pre-coupling ID and a post-coupling ID are set to "no setting".

When the state status of the coupling source flow line is "entrance→inside of store", the coupling source flow line includes a start time point of tracing. In this case, the control section 37 judges a state status of the edit flow line data selected as the coupling destination flow line in Step ST102.

When the state status of the coupling destination flow line is "inside of store→inside of store", the coupling destination flow line is in the process of tracing. In this case, the control section 37 determines as a "coupling source flow line ID" start point information of each of the two pieces of flow line edit data selected as the coupling source flow line and the coupling destination flow line. Furthermore, a pre-coupling ID of the edit flow line data selected as the coupling source flow line is set to "no setting", and a post-coupling ID of the same is set to a "coupling destination flow line ID". On the other hand, a pre-coupling ID of the edit flow line data selected as the coupling destination flow line is set to a "coupling source flow line ID", and a post-coupling ID of the same is not set.

When the state status of the coupling destination flow line is "inside of store→entrance" or "entrance", the coupling destination flow line includes an end time point of tracing. In this case, the control section 37 sets as the "coupling source flow line ID" the start point information of each of the two pieces of flow line edit data selected as the coupling source flow line and the coupling destination flow line. Moreover, the pre-coupling ID of the edit flow line data selected as the coupling source flow line is set to "no setting", and the post-coupling ID of the same is set to the "coupling destination flow line ID". On the other hand, the pre-coupling ID of the edit flow line data selected as the coupling destination flow line is set to the "coupling source flow line ID", and the post-coupling ID of the same is set to "no setting".

When the state status of the coupling source flow line is "inside of store→inside of store", the coupling source flow line is in the process of tracing. In this case, the control section 37 judges a state status of the edit flow line data selected as the coupling destination flow line in Step ST103.

When the state status of the coupling destination flow line is "inside of store→inside of store", the coupling destination flow line is also in the process of tracing. In this case, the control section 37 sets start point information of the flow line edit data selected as the coupling destination flow line to a "start point of the coupling source flow line". Moreover, a pre-coupling ID of the edit flow line data selected as the coupling destination flow line is set to a "coupling source flow line ID", and a post-coupling ID is not set. Additionally, a post-coupling ID of the edit flow line data selected as the coupling source flow line is set to a "coupling destination flow line ID".

When the state status of the coupling destination flow line is "inside of store→inside of store", the coupling destination flow line includes an end time point of tracing. In this case, the control section 37 sets the start point information of the edit flow line data selected as the coupling destination flow line to the "staring point of the coupling source flow line". Further, the pre-coupling ID of the edit flow line data selected as the coupling destination flow line is set to the "coupling source flow line ID", and the post-coupling ID is set to "no setting". Furthermore, the post-coupling ID of the edit flow line data selected as the coupling source flow line is set as the "coupling destination flow line ID".

When the coupling definition processing is terminated, the control section 37 determines whether or not the coupling source flow line extending to a store exiting point has been defined in Step ST17. When the edit flow line data selected as the coupling source flow line is a complete flow line, it is considered that the flow line extending to the store exiting point has been defined. Moreover, even if the state status of the edit flow line data selected as the coupling destination flow line is "inside of store→entrance", it is considered that the flow line extending to the store exiting point has been defined. In any other case, it is considered that the flow line extending to the store exiting point has not been defined. When the flow line extending to the store exiting point has not been defined, the control section 37 substitutes the edit flow line data selected as the coupling destination flow line for the coupling source flow line in Step ST18. Further, the control section 37 executes the processing of Step ST9 and subsequent steps again.

When it is determined that the flow line extending to the store exiting point has been defined in Step ST17, the control section 37 determines whether termination of selection of a flow line has been instructed in Step ST19.

When continuing the flow line confirming operation, the operator operates the input section 31 to instruct continuation of selection of a flow line. When terminating the flow line confirming operation, the operator manipulates the input section 31 to instruct termination of selection of a flow line.

When continuation of selection of a flow line is instructed, the control section 37 returns to the processing of Step ST6. Specifically, the control section 37 displays the flow line list in the flow line list display section 53 and waits for the next coupling source flow line to be selected.

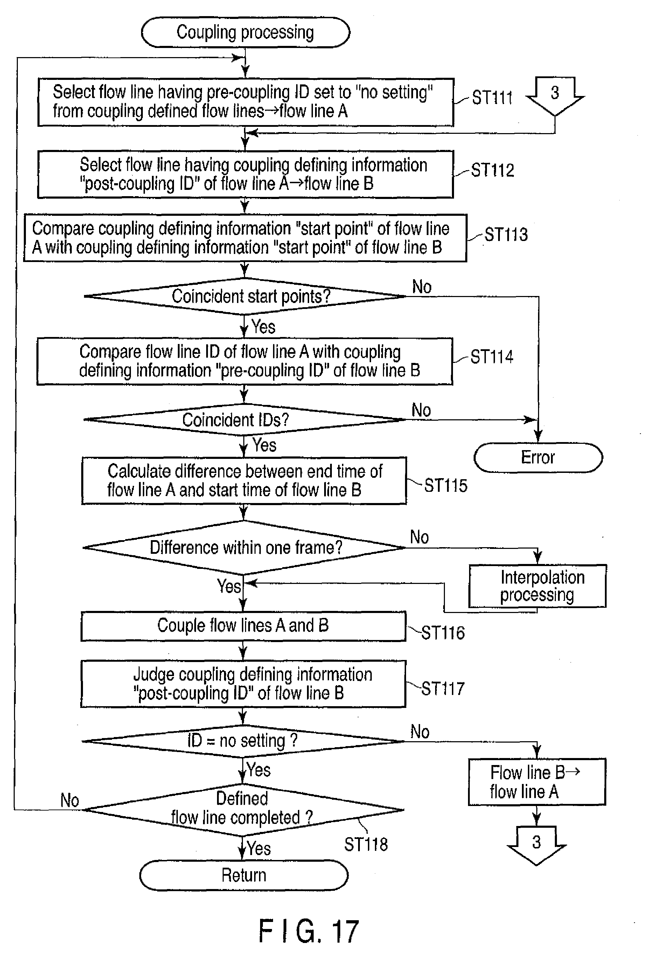

When termination of selection of a flow line is instructed, the control section 37 executes coupling processing in Step ST20. A flowchart of FIG. 17 shows a procedure of this coupling processing. Specifically, the control section 37 first searches the edit flow line database 43 to select one piece of edit flow line data having a pre-coupling ID set to "no setting" in Step ST111. The control section 37 recognizes the selected edit flow line data as first flow line data A.

Then, the control section 37 acquires a post-coupling ID of the edit flow line data for this first flow line data A in Step ST112. Furthermore, edit flow line data having the post-coupling ID set as a flow line ID is acquired from the edit flow line database 43. The control section 37 recognizes the acquired edit flow line data as second flow line data B.

Subsequently, the control section 37 compares start point information of the first flow line data A with start point information of the second flow line data B in Step ST113. When both the pieces of start point information match with each other, the control section 37 compares a flow line ID of the first flow line data A with a pre-coupling ID of the second flow line data B in Step ST114. When the IDs match with each other, the control section 37 calculates a time difference between a shooting date/time of index information corresponding to a last frame of the first flow line data A and a shooting date/time of index information corresponding to a top frame of the second flow line data B in Step ST115. Moreover, the control section 37 determines whether this time difference falls within one frame of a camera image.

When the time difference falls within one frame, the control section 37 determines that an end point of the first flow line data A matches with a start point of the second flow line data B. The control section 37 couples the first flow line data A with the second flow line data B in Step ST116. Specifically, the control section 37 reads all index information from the top frame to the last from of the second flow line data B. Additionally, the read index information is added to the end of the index information corresponding to the last frame of the first flow line data A. Further, the control section 37 substitutes end point coordinates of the first flow line data A for two-dimensional coordinates of the index information corresponding to the last frame read from the second flow line data B. Furthermore, the control section 37 executes the same processing as the state definition processing with respect to the first flow line data A to redefine the state status. As a result, new edit flow line data indicative of a flow line from the start point of the coupling source flow line to the end point of the coupling destination flow line (complete flow line editing means).

When the time difference in shooting date/time is longer than one frame, the end point of the first flow line data A does not match with the start point of the second flow line data B. In this case, the control section 37 executes an interpolation processing. As the interpolation processing, there is linear interpolation that connects the end point of the first flow line data A with the start point of the second flow line data B by a straight line. Since movement of a customer in the store is mainly slow walking, linear interpolation can realize sufficient interpolation processing. After the interpolation processing, the control section 37 executes coupling processing in Step ST116.

Thereafter, the control section 37 checks a post-coupling ID of the second flow line data B in Step ST117. When the post-coupling ID is other than "no setting", the control section 37 substitutes the first flow line data A for the second flow line data B to execute the processing of Step ST112 and subsequent steps again.

When the post-coupling ID of the second flow line data B is "no setting", the control section 37 determines whether or not any other edit flow line data having a pre-coupling ID set to "no setting" is present in Step ST138. If there is another edit flow line data, the control section 37 executes the processing of Step ST111 and subsequent steps again. If there is no such data, the flow line editing program P1 is terminated.

When the operator operates the input section 31 to select flow line data that is a coupling source and flow line data that is a coupling destination from the edit flow line database 43 in this manner, flow line data indicative of a flow line from a start point of the flow line data as the coupling source and an end point of the flow line data as the coupling destination is automatically generated in the flow line analysis apparatus 3. Therefore, routes of a customer who has entered from the entrance/exit IN/OUT, walked around in the store, and exited the store after making payment at the checkout counter CH can be connected through one flow line.

If a command to start a flow line analysis business is given, the flow line analysis program P2 is activated. If the flow line analysis program P2 is activated, a flow line analysis menu is displayed in the display section 32. The flow line analysis menu includes an accounting input business, transaction matching business, behavior analysis business, and condition retrieval business.

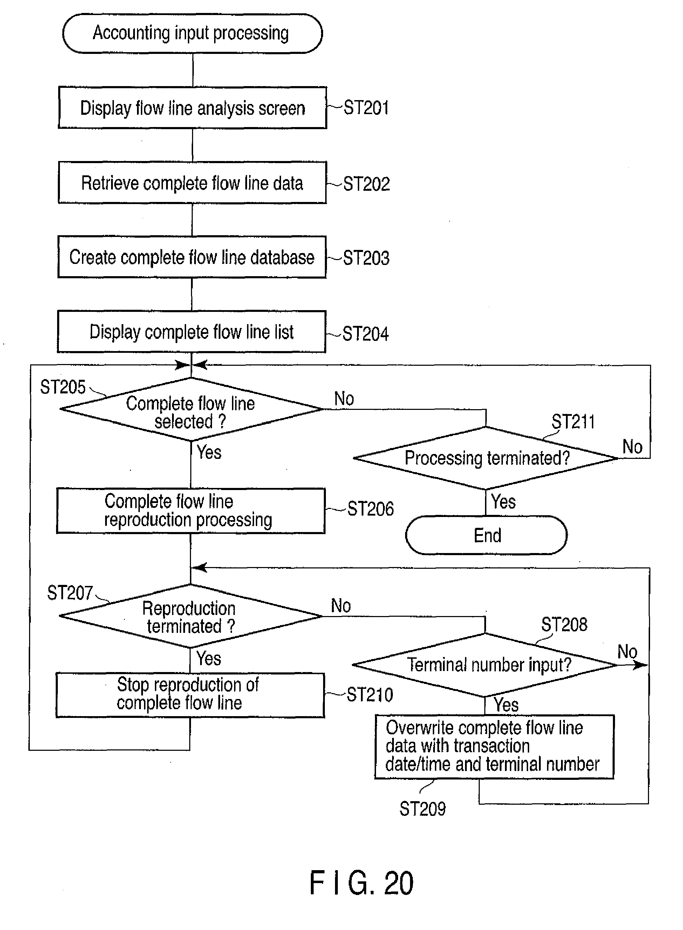

If the accounting input business is selected from the flow line analysis menu, the control section 37 is connected to the flow line server 20 through the communication section 33 in order to access the databases 41 to 47. Then, accounting input processing of the procedure shown in the flowchart of FIG. 20 is executed in accordance with the flow line analysis program P2.

In Step ST201, the control section 37 causes the display section 32 to display a flow line analysis screen. This flow line analysis screen, like the flow line editing screen 50, is divided into a flow line display section, camera image display section, flow line list display section, and coordinate display section.

In Step ST202, the control section 37 detects complete flow line data, out of the edit flow line data stored in the edit flow line database 43. Specifically, the control section 37 detects the edit flow line data of which the state status is "entrance→entrance" or "entrance". When all pieces of the complete flow line data are detected, the control section 37 creates in the output file 36 a complete flow line database 38 in which the complete flow line data is stored, in Step ST203.

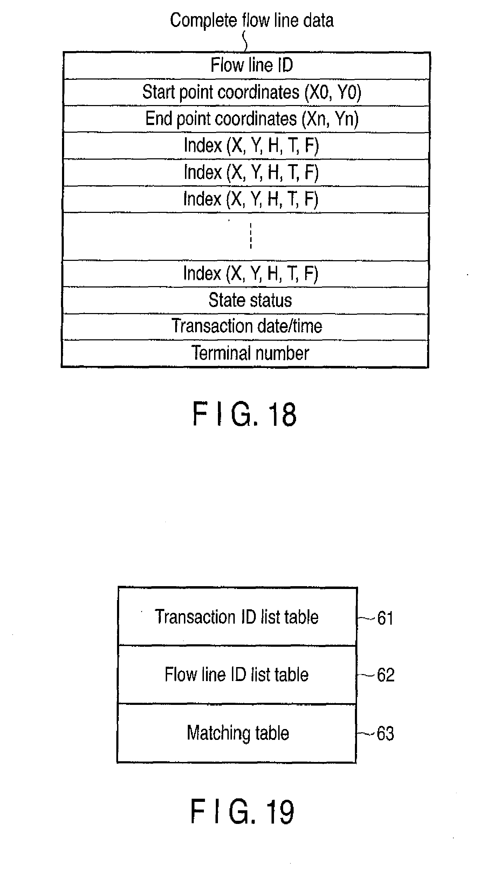

FIG. 18 shows a data structure of the complete flow line data. As shown in FIG. 18, the complete flow line data is composed of a management number, intrinsic flow line ID, start point coordinates, end point coordinates, a plurality of pieces of index information corresponding to the frame images from the start point to end point, state status, transaction date/time information, and terminal number. The management number is any of continuous integers from 1 to M. The number M agrees with the number of pieces of the complete flow line data stored in the complete flow line database 38.

Then, the control section 37 creates a complete flow line list that includes flow lines Interfaces of the complete flow line data, start time, and end time, in Step ST204. The start time is the shooting date/time of the index information corresponding to the frame image of the start point coordinates. The end time is the shooting date/time of the index information corresponding to the frame image of the end point coordinates. The order of the list is an order based on the start time. The complete flow line list is displayed in the flow line list display section.

The operator manipulates the input section 31 to select a desired complete flow line ID from the complete flow line list. For example, the operator successively selects the flow line IDs in descending order of position from the list. If the flow line ID is selected (YES in Step ST205), the control section 37 executes complete flow line reproduction processing (flow line reproduction means) in Step ST206. The procedure of this reproduction processing is the same as that of the coupling source flow line reproduction illustrated in FIG. 13 except for target flow line data. Therefore, a description of this processing procedure will be omitted.

When the complete flow line reproduction processing is executed, the flow line display section in the flow line analysis screen displays a flow line selected from the complete flow line list by the operator. Further, the camera image display section displays camera images obtained at the same time point in synchronization with the flow line. Furthermore, a flow line ID is displayed in a target position of the flow line.

Thereupon, the operator recognizes the customer's movement path from the camera images and flow line images. At the point in time when a settlement of a business transaction is supposed to have been started after the checkout counter CH is reached by the customer, the operator inputs the terminal number of the POS terminal 11a or 11b at the checkout counter CH. The input of the terminal number can be repeated any number of times such that a start point of the settlement of the transaction is ascertained. If the start point is confidently ascertained, the operator gives a command to terminate the reproduction. If the customer leaves the store without settling the transaction, the operator only gives the command to terminate the reproduction.

If the terminal number is input through the input section 31 (YES in Step ST208: settlement information acceptance means), the control section 37 acquires the shooting date/time information of the frame image having reproduced by the time of the input in Step ST209. Then, the control section 37 overwrites the complete flow line data being produced with the acquired date/time information and terminal number.

The time for the input of the terminal number may be the point in time when the transaction settlement is finished, that is, the time when the checkout key of the POS terminal is supposed to have been operated, not the time when the settlement is started.

If the command to terminate the reproduction is given through the input section 31 (YES in Step ST207), the control section 37 stops the reproduction of the complete flow line in Step ST210. The control section 37 waits for selection of the next flow line ID. If the next flow line ID is selected (YES in Step ST205), the control section 37 repeats the processing of Steps ST206 to ST210. If termination of processing is declared without selection of the next flow line ID (YES in Step ST211), the control section 37 terminates this accounting input processing.

Thus, based on the movement of the flow line and its associated camera image, the operator can add the number of the POS terminal 11 and the time when the transaction settlement is started or finished by the customer at the checkout counter to the customer's complete flow line data.

If the transaction matching business is selected from the flow line analysis menu, the control section 37 determines whether or not the complete flow line database 38 is prepared in the output file 36. If the complete flow line database 38 is not prepared, the transaction matching business is interrupted.

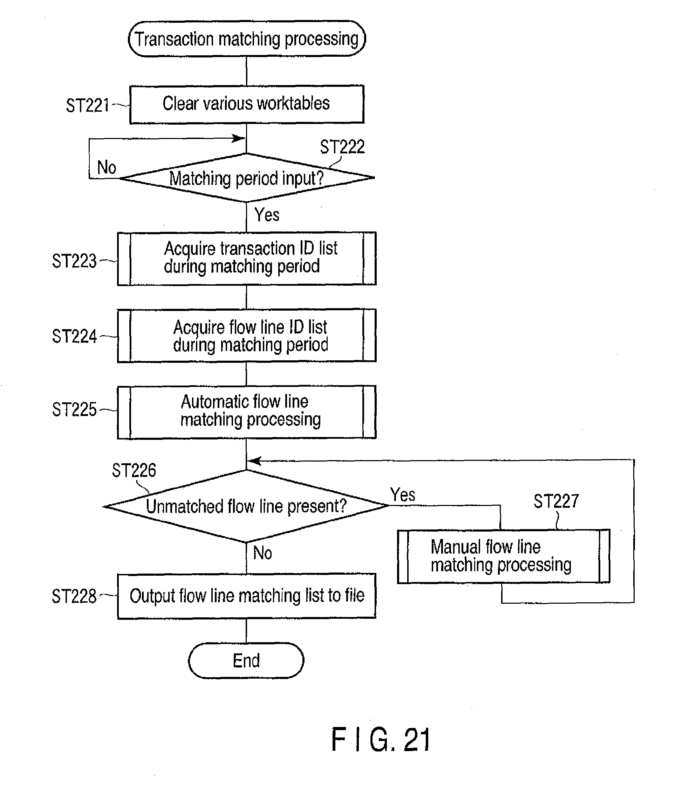

If the complete flow line database 38 is prepared, the control section 37 is connected to the POS server 12 through the communication section 33 in order to access the transaction database 14. Then, the control section 37 executes transaction matching processing in accordance with the flow line analysis program P2. The procedure of this transaction matching processing is shown in the flowchart of FIG. 21.

In Step ST221, the control section 37 clears worktables used in the transaction matching processing. As shown in FIG. 19, the worktables include a transaction ID list table 61, flow line ID list table 62, and matching table 63.

In Step ST222, the control section 37 waits until a matching period is input. The operator manipulates the input section 31 to input an appropriate start date/time and end date/time for the matching period. The end date/time is later than the start date/time. Only the start date/time may be input with the current date/time regarded as the end date/time.

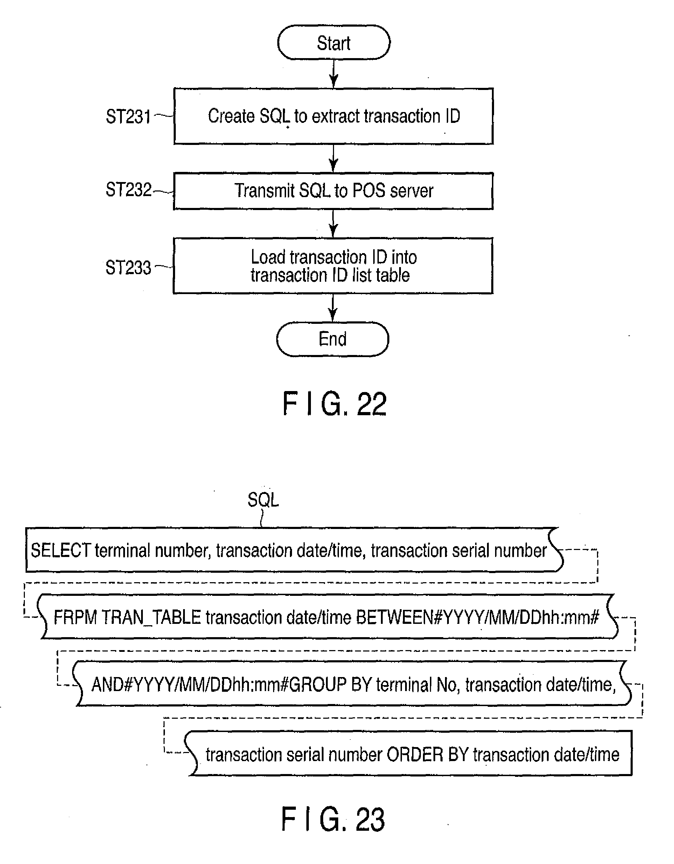

When the matching period is input, the control section 37 matches the complete flow line data with transaction data produced during this period according to the following procedure. Specifically, the control section 37 executes transaction ID list acquisition processing within the matching period in Step ST223. The procedure of this processing is specifically shown in the flowchart of FIG. 22.

Thus, the control section 37 creates a structured query language (SQL) for extracting the transaction ID during an assigned matching period in Step ST231. Then, in Step ST232, this SQL is transmitted to the POS server 12 through the communication section 33.

FIG. 23 shows an example of the SQL. This SQL is used to acquire the transaction IDs, each composed of a terminal number, transaction date/time, and transaction serial number, from the transaction database 14 and align them in ascending order of transaction date/time.

On receipt of the SQL described above, the POS server 12 retrieves the transaction database 14 and extracts all the transaction data with the transaction date/time within the assigned period. Then, the POS server 12 creates a transaction ID list of these transaction ID data each composed of the terminal number, transaction date/time, and transaction serial number. The transaction ID list is transmitted to the flow line analysis apparatus 3.

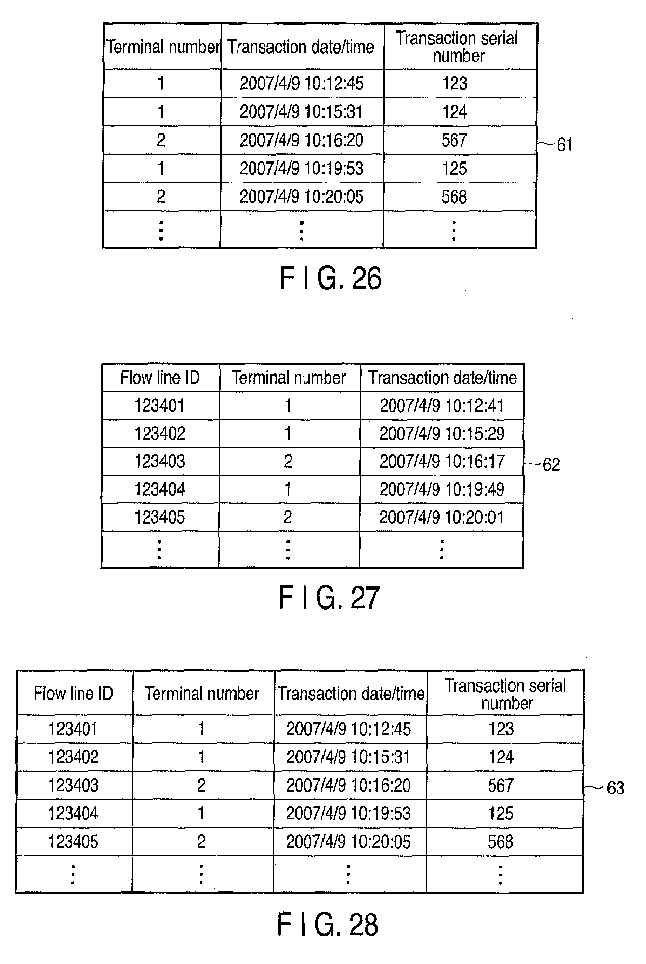

On receipt of the transaction ID list from the POS server 12, the control section 37 loads it into the transaction ID list table 61 in Step ST233. FIG. 26 shows an example of the transaction ID list table 61.

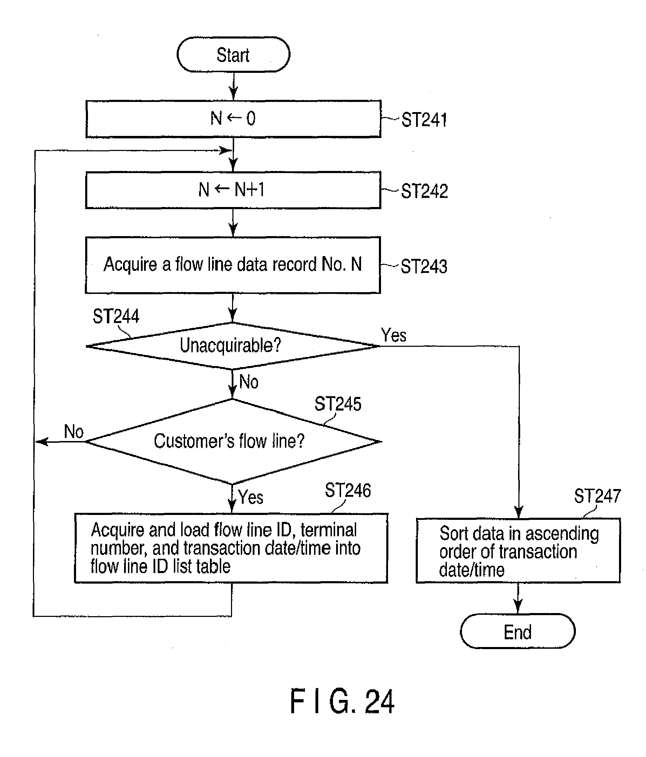

When the transaction ID list acquisition processing is finished, the control section 37 executes flow line ID list acquisition processing within the matching period in Step ST224. The procedure of this processing is specifically shown in the flowchart of FIG. 24.

In Step ST241, the control section 37 resets a counter N to "0". When the counter N is reset to "0", the control section 37 counts up the value of the counter N by "1" in Step ST242.

In Step ST243, the control section 37 regards the value of the counter N as a record number. Then, complete flow line data of a record number N is acquired from the data in the complete flow line database 38.

If the complete flow line data of the control number N can be acquired (NO in Step ST244), the control section 37 determines whether or not the complete flow line data is the customer's data in Step ST245. If data on the terminal number and transaction date/time are attached to the complete flow line data, the entire data is the complete flow line data of customers having performed transactions. In this case, the control section 37 acquires various data, such as the flow line ID, terminal number, and transaction date/time, from the complete flow line data in Step ST246, and loads the acquired data into the flow line ID list table 62. Thereafter, the control 37 returns to Step ST242.

If the data on the terminal number and transaction date/time are not attached to the complete flow line data, the entire data is the complete flow line data of customers having leaved the store without performing any transactions. In this case, the control section 37 returns to Step ST242 without executing the processing of Step ST246.

The control section 37 repeats the processing of Steps ST242 to St246 for the number M of complete flow line data stored in the complete flow line database 38. In consequence, the flow line ID list table 62 is loaded with a flow line ID list that is composed of flow line IDs of the complete flow line data for the customers having performed the transactions, the terminal number of the POS terminal set in the checkout counter at which the customers have settled the transactions, and the transaction date/time of each settlement.

If the complete flow line data of the control number N cannot be acquired (YES in Step ST244), the control section 37 sorts data in the flow line ID list table 62 in ascending order of transaction date/time in Step ST247. FIG. 27 shows an example of the flow line ID list table 62.

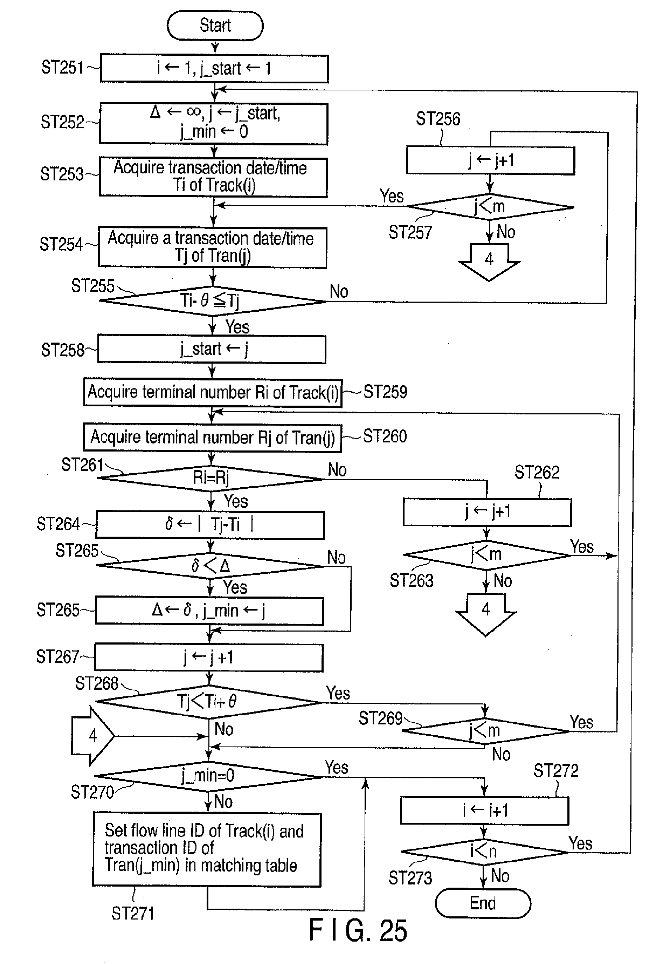

When the flow line ID list acquisition processing is finished, the control section 37 executes automatic flow line matching processing (flow line matching means) in Step ST225. The procedure of this processing is specifically shown in the flowchart of FIG. 25.

In FIG. 25, "Track(i)" indicates data in a flow line ID list, so-called flow line ID data (a flow line ID, a terminal number, and transaction date/time). The suffix "i" indicates an integer from "1" to "n" ("n" is the number of flow line data stored in the flow line ID list table 62).

"Tran(j)" indicates data in a transaction ID list, so-called transaction ID data (a terminal number, transaction date/time, and a transaction serial number). The suffix "j" indicates an integer from "1" to "m" ("m" is the number of transaction IDs stored in the transaction ID list table 61).

"$\theta$" indicates a time range ($-\theta$ to $+\theta$) for a transaction date and time to be matched. The time range $\theta$ is optionally set by the user before starting operations. "$\delta$" indicates an absolute value of the difference between transaction dates and time to be matched. "$\Delta$" indicates a minimum of the absolute value $\delta$. "j_min" indicates a numeric value $j$ when the minimum of the absolute value $\delta$ is a minimum value. "j_start" is the numerical value $j$ at a position of starting comparison of transaction dates and time.

When the automatic matching processing is started, the control section 37 sets the numeric values $i$ and $j\_$ start to "1" in Step ST251. The control section sets the minimum value $\Delta$ to infinity, the numeric value $j$ to the numeric value j_start, and the numeric value j_min to "0", respectively, in Step ST252.

The control section 37 acquires the flow line ID data Track(i) from the flow line ID list table 62 in Step ST253, and extracts transaction date/time $Ti$ from the flow line ID data Track(i). The control section 37 acquires a transaction ID Tran(j) from the transaction ID list table 61 in Step ST254, and extracts a transaction date/time Tj from the transaction ID Tran(j).

The control section 37 determines whether or not the transaction date/time Tj reaches the date/time "T1 - $\theta$", transaction date/time T1 minus time range $\theta$, in Step ST255. If not, the control section 37 counts up the numeric value $j$ by "1" in Step ST256. After counting up the numeric value $j$, the control section 37 determines whether or not the numeric value $j$ exceeds the number $m$ of transaction IDs in Step ST37. If not, the control section 37 returns to Step ST254.

Specifically, the control section 37 retrieves the transaction ID Tran(j) from the transaction ID list table 61. The control section extracts a transaction date/time Tj from the transaction ID Tran(j), and compares it with the date/time "T1 - $\theta$".

By the processing described above, it is determined whether or not the transaction date/time Tj from the transaction ID data Tran(j) reaches the date/time equivalent to the result of subtraction of the allowable time range $\theta$ from the transaction date/time Ti from the flow line list data Track(i) before the integer $j$ exceeds the number of data $m$.

When the transaction date/time Tj reaches the date/time "Ti - $\theta$" (YES in Step ST255), the control section 37 replaces the numeric value j_start with the current numeric value $j$ in Step ST258.

The control section 37 extracts a terminal number Ri from the flow line ID data Track(i) in Step ST259, and extracts a terminal number Rj from the transaction ID Tran(j) in Step ST260.

The control section 37 determines whether or not the terminal number Rj coincides with the terminal number Ri in Step ST261. If not, the control section 37 counts up the numeric value $j$ by "1" in Step ST262. After counting up the numeric value j, the control section 37 determines whether or not the numeric value j exceeds the number of pieces of data m in Step ST263. If not, the control 37 returns to Step ST260.

Specifically, the control section 37 retrieves the transaction ID Tran(j) from the transaction ID list table 61. The control section 37 obtains a terminal number Rj from the transaction ID Tran(j), and compares it with the terminal number Ri.

By the processing described above, the terminal number Rj from the transaction ID data Tran(j) is checked to see if it agrees with the terminal number Ri from the flow line list data Track(i) before the integer j exceeds the number of data m.

When the terminal number Rj coincides with the terminal number Ri (YES in Step ST261), the control section 37 retrieves transaction date/time Ti from the flow line ID data Track(i), as Step ST264, and extracts the transaction date/time Tj from the transaction ID Tran(j). Then, the control section calculates the absolute value $\delta$ of the difference between the transaction date/time Tj and the transaction date/time Ti.

The control section 37 compares the absolute value $\delta$ with the minimum value $\Delta$ in Step ST265. When the absolute value $\delta$ is smaller than the minimum value $\Delta$, the control section 37 replaces the minimum value $\Delta$ with the absolute value $\delta$ in Step ST266, and replaces the numeric value j_min with the numeric value j. When the absolute value $\delta$ is larger than the minimum value $\Delta$, the control section 37 does not perform the operation of Step ST266.

The control section 37 counts up the numeric value j by "1" in Step ST267. After counting up the numeric value j, the control section 37 retrieves a transaction ID Tran(j) from the transaction ID list table 61, and extracts transaction date/time Tj from the transaction ID Tran(j).

The control section 37 determines whether or not the transaction date/time Tj reaches the date/time "Ti + $\theta$", transaction date/time Ti plus time range $\theta$, in Step ST268. If not, the control section 37 determines whether or not the numeric value j exceeds the number of pieces of data m in Step ST49. If not, the control section returns to Step ST260.

Specifically, the control section 37 extracts the terminal number Rj from the transaction ID Tran(j). The control section 37 determines whether or not the terminal number Rj coincides with the terminal number Ri. If not, the control section executes the operations of Steps ST262 and ST263. When the terminal numbers are matched, the control section executes the operations of Steps ST264 to ST269.

When the transaction date/time Tj of the transaction ID Tran(j) reaches the date/time "Ti + $\theta$" (NO in Step ST268), or when the numeric value j exceeds the number of pieces of data m (NO in Steps ST257, ST263, and ST269), the control section 37 determines whether or not the numeric value j_min is unchanged from "0" in Step ST270.

If the numeric value j_min is not "0", the control section 37 executes the operation of Step ST271. Specifically, the control section 37 extracts a flow line ID from the flow line ID data Track(i), and extracts a terminal number, transaction date/time, and transaction serial number from the transaction ID Tran(j_min). Then, the control section 37 stores the flow line ID, terminal number, transaction date/time, and transaction serial number as one record in the matching table 63.

When the operation of Step ST271 is finished, or when the integer j_min is unchanged from "0", the control section 37 counts up the numeric value i by "1" in Step ST272. The control section determines whether or not the numeric value i exceeds the number of flow line ID data n in Step ST273. If not, the control section returns to Step ST252.

Specifically, the control section 37 sets the minimum value $\Delta$ to infinity, the numeric value j to the numeric value j_start, and the numeric value j_min to "0", respectively. The control section retrieves a flow line ID data Track(i) from the flow line ID list table 62, and executes the operations of Steps ST253 to Step ST273.

Thus, in the matching table 63, the transaction ID is matched with each flow line ID. This transaction ID is coincident with the terminal number added to the flow line data identified by the flow line ID, and is the ID of the transaction data with a transaction date/time closest to that added to flow line data.

FIG. 28 shows an example of the matching table 63. The data of this example correspond to those in the transaction ID list table 61 shown in FIG. 26 and the flow line ID list table 62 shown in FIG. 27.

If the numeric value i exceeds the number of flow line ID data n (NO in Step ST273), automatic matching processing is finished.

After the automatic matching processing is finished, the control section 37 determines whether or not any flow line data not matched with a transaction ID exists in Step ST226. The control section 37 collates each flow line ID set in the flow line ID list table 62 with each flow line ID set in the matching table 63. A transaction ID is not matched with a flow line ID not existing in the matching table 63.

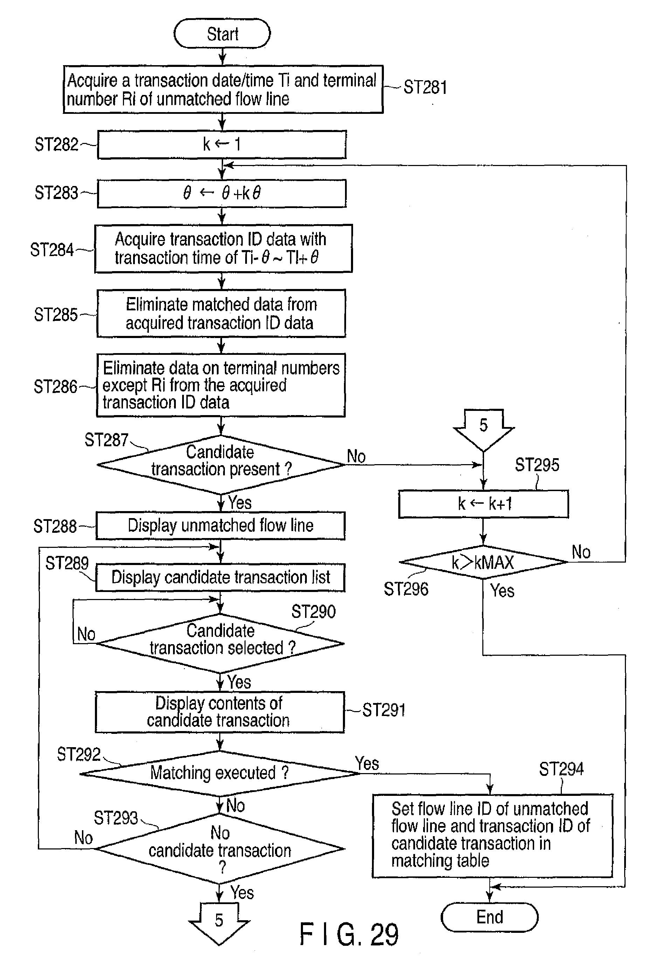

After detecting a flow line ID not matched with a transaction ID, a so-called unmatched flow line ID, the control section 37 executes manual matching processing of flow line data and transaction data in Step ST227. The procedure of this process is specifically shown in the flowchart of FIG. 29.

In FIG. 29, "k" indicates the number of repetitions, and "kMAX" indicates a maximum number of repetitions k. The number of repetitions k and maximum number kMAX are optionally set by the user before starting operations.

When the manual matching processing is started, the control section 37 retrieves the transaction data and time Ti and terminal number Ri corresponding to the unmatched flow line ID, from the flow line ID list table 62 in Step ST281. The control section 37 initializes the number of repetitions k to "1" in Step ST282.

The control section 37 multiplies the time range θ at the present time by the number of repetitions $\underline{k}$, and adds the product to the time range θ in Step ST283. Specifically, when the number of repetitions $\underline{k}$ is "1", the control section expands the time range θ by two times. When the number of repetitions $\underline{k}$ is "2", the control section expands the time range θ by three times.

The control section 37 calculates the date/time "Ti - θ", transaction date/time Ti minus time range θ after the expansion in Step ST284. The control section 37 calculates the date/time "Ti + θ", transaction date/time Ti plus time range θ after the expansion. And, the control section 37 retrieves transaction IDs within the period in which the transaction date/time Tj is in a range of "Ti - 0" to "Ti + θ", from the transaction ID list table 61, as matching candidates.

After obtaining transaction IDs as matching candidates, the control section 37 abandons transaction IDs satisfying the following conditions among the candidates in Steps ST285 and ST286. The control section abandons a transaction ID already set in the matching table 63, in Step ST285, and abandons a transaction ID having a terminal number Rj different from a terminal number Ri, in Step ST286.

The control section 37 checks whether or not a transaction ID as a matching candidate remains in Step ST287. When a candidate transaction ID remains, the control section 37 acquires flow line data of an unmatched flow line ID from the complete flow line database 38.

The control section 37 displays a flow line based on the flow line data in the display section 32 in Step ST288. The control section 37 displays a list of transaction IDs as matching candidates, a so-called candidate transaction list, in the display section 32 in Step ST289. For example, the screen of the display section 32 is divided into two areas, and a flow line is displayed on one area, and a candidate transaction list is displayed on the other area.

The control section 37 waits until any one of transaction IDs is selected from the candidate transaction list in Step ST290.

When any one transaction ID is selected through the input section 31, the control section 37 inquires the POS server 12 about the transaction data specified by the transaction ID selected in Step ST291. When the POS server 12 returns the transaction data as a response to the inquiry, the control section 37 displays the contents of the data, that is, the name, etc. of a purchased merchandise item in the display section 32. The contents of the transaction data are displayed instead of a candidate transaction list.

The operator estimates a customer's purchasing behavior according to a customer's flow line, and determines whether or not the transaction data is of an object customer. When the transaction data is of an object customer, the operator presses the execute key in the input section 31. If not, the operator presses the cancel key in the input section 31.

The control section 37 waits until the execution key or the cancel key is pressed in Step ST292. When the cancel key is pressed (NO in Step ST292), the control section 37 determines whether or not another transaction ID exists as a matching candidate in Step ST293. When another candidate transaction ID exists, the control section returns to Step ST289.

When the execute key is pressed (YES in Step ST292), the control section 37 determines the selected transaction ID as a matching object in Step ST294. The control section 37 stores an unmatched flow line ID and a transaction ID decided as a matching object in the matching table 63, as one record. Now, the manual matching processing for a flow line ID not matched with a transaction ID is finished.

When no transaction ID remains as a matching candidate (NO in Step ST287), or when a transaction ID as a matching candidate is used up (YES in Step ST293), the control section 37 counts up the number of repetitions $\underline{k}$ by "1" in Step ST295.

After counting up the number of repetitions $\underline{k}$, the control section 37 determines whether or not the number of repetitions $\underline{k}$ exceeds a maximum value kMAX in Step ST296. When the number of repetitions $\underline{k}$ does not exceed a maximum value kMAX, the control section 37 returns to Step ST283. Specifically, the control section 37 further expands the time range θ, and repeats the operations at and after Step ST284.

When the number of repetitions $\underline{k}$ exceeds a maximum value kMAX, the manual matching processing is finished. In this case, a transaction ID is not matched with an unmatched flow line ID.

The control section 37 executes the above manual matching processing whenever detecting an unmatched flow line ID (YES in ST226). After executing the manual matching processing for all unmatched flow line IDs (NO in ST226), the control section 37 outputs a matching list of flow line IDs and transaction IDs stored in the matching table 63, to the output file 36 in Step ST228. Thereupon, the flow line analysis program P2 is terminated.

Thus, the flow line analysis apparatus 3 executes processing of the following items.

1. Processing to create the transaction ID list.
2. Processing to create the flow line ID list.
3. Processing to form a combination of each flow line ID of the flow line ID list and each transaction ID of the transaction ID list such that the individual transaction date/time data have a minimum difference.
4. Processing to output a combination list for the flow line and transaction IDs.

Based on these items of processing, the flow line analysis apparatus 3 can accurately match transaction data indicative of the contents of customers' transactions with the customers' flow line data. In consequence, the labor and time required for the matching operation can be considerably reduced.

The flow line analysis apparatus 3 forms a combination of each flow line ID of the flow line ID list and each transaction ID of the transaction ID list such that the terminal numbers of the POS terminals 11 are coincident and the individual transaction date/time data have the minimum difference. Even in the store that uses the plurality of POS terminals 11a and 11b, therefore, the flow line analysis apparatus 3 can accurately match the transaction data with the flow line data.

Each time the flow line ID is selected from the flow line ID list, the flow line analysis apparatus 3 retrieves from the transaction ID list a transaction ID including transaction date/time data within the fixed time range θ for the time of the transaction date/time data corresponding to that flow line ID. Then, the flow line analysis apparatus 3 calculates the time difference θ and combines the selected flow line ID with a transaction ID such that the time difference δ is minimal. Thus, the flow line analysis apparatus 3 checks the matchability of only the transaction data of which the transaction time range is around the transaction date/time of the flow line data. Accordingly, the flow line analysis apparatus 3 is efficient due to its short processing time for the check.

The flow line analysis apparatus 3 extracts uncombined flow line IDs from the flow line ID list. Then, the flow line analysis apparatus 3 retrieves from the transaction ID list those transaction IDs which include transaction date/time data within a time range kθ that covers the transaction date/time data corresponding to the extracted flow line ID and is wider than the fixed time range θ. The flow line analysis apparatus 3 causes the display section 32 to display uncombined ones of the retrieved transaction IDs. Thus, according to the flow line analysis apparatus 3, suitable ones of candidate transaction IDs can be manually matched with the uncombined flow line IDs, and this matching operation is simple and easy.

If the behavior analysis business is selected from the flow line analysis menu, the control section 37 determines whether or not the complete flow line database 38 is prepared in the output file 36. If the complete flow line database 38 is not prepared, the behavior analysis business is interrupted.

If the complete flow line database 38 is prepared, the control section 37 determines whether or not a sub-area setting table 39 is prepared in the output file 36. If the sub-area setting table 39 is not prepared, the behavior analysis business is interrupted.

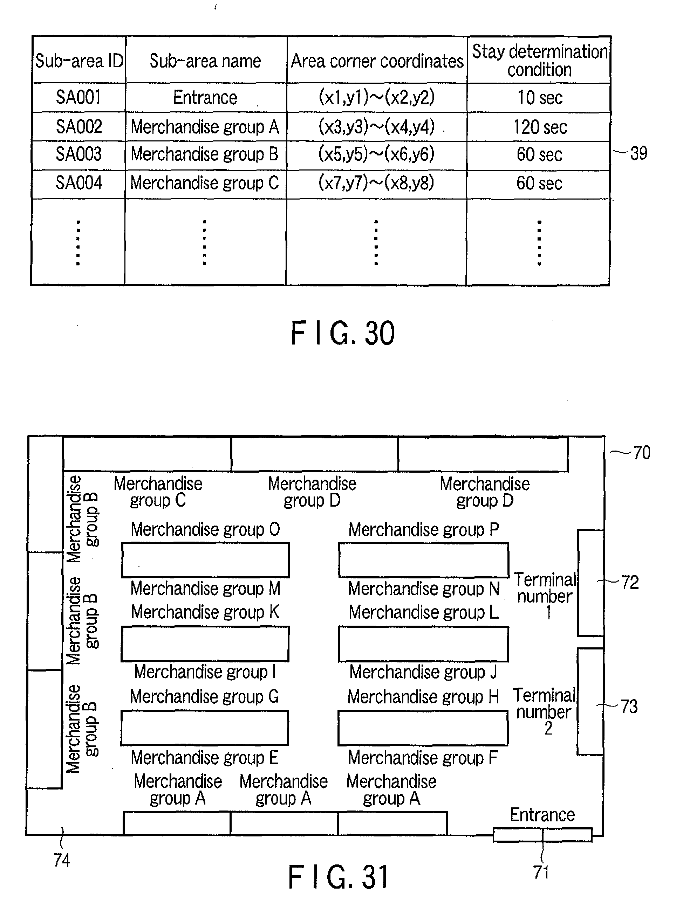

As shown in FIG. 30, the sub-area setting table 39 stores item data (e.g., a sub-area name, area corner coordinates, and conditions for stay determination) corresponding to a unique sub-area ID. Each of areas into which the inside of a store (i.e., the tracking range of flow line data) is divided is referred to as a sub-area.

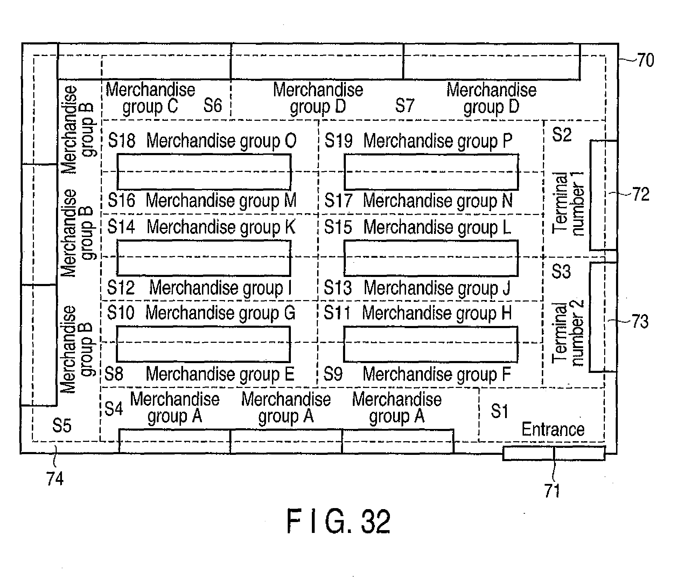

An example of dividing the inside of a store will now be described with reference to FIGS. 31 and 32. FIG. 31 shows an example of the layout of a store area 70. The store area 70 in this example has: an entrance 71 through which customers enter or exit; checkouts 72 and 73 in two places, each checkout being equipped with a POS terminal 11; and a merchandise display section 74 where merchandise is displayed. The merchandise display section 74 is divided according to the merchandise categories (i.e., merchandise groups), such as beverages, box lunches, confectionary, magazines, desserts, and stationery. In FIG. 31, merchandise groups in the same category are labeled with the same reference alphabet.

Such a store area 70 is divided into smaller areas, as shown by broken lines in FIG. 32. Specifically, the entrance 71 and the checkouts 72 and 73 are separated as sub-areas S1, S2, and S3 respectively. The merchandise display section 74 is sectioned according to merchandise categories (i.e., merchandise groups A to P) and labeled with sub-areas S4 to S19. Each of the sub-areas S1 to S19 is rectangular. The two-dimensional coordinates (xi, yi) and (xj, yj) in upper-left and lower-right corners, respectively, of the rectangle are used as the area corner coordinates of each of the sub-areas S1 to S19.

In the sub-area setting table 39, the condition for stay determination is a threshold for determining whether or not a customer stayed in any sub-area specified by the corresponding sub-areas ID or just passed by. The present embodiment sets time data for use as the condition for stay determination. If a customer stays in a sub-area corresponding to a flow line for at least the time set as the condition for stay determination, the control section 37 determines that the customer corresponding to the flow line stayed in the sub-area. If a customer leaves a sub-area corresponding to the flow line before the elapse of the set time, the control section 37 determines that the customer corresponding to this flow line just passed the sub-area. A detailed description of such a stay determination means will be given later.

A sub-area setting program used to set the sub-areas is stored in the program storage section 34. The program is initiated by the operator setting the sub-areas.

Upon initiation of the sub-area setting program, the control section 37 displays a flat image of the inside of the store, as shown in FIG. 31, on the display section 32. The control section 37 waits until rectangles representing sub-areas are drawn on the image. The control section 37 also waits until the names specifying the sub-areas and the corresponding conditions for stay determination are input.

The operator uses an input section 31 to draw rectangles representing sub-areas onto a display image. Further, specific names and stay determination conditions for these sub-areas are input. The operator repeats these operations so that the division of the entire store area 70 into the sub-areas is completed.

When the sub-areas are depicted, the control section 37 calculates the area corner coordinates for the upper-left and lower-right corners of the depicted regions. Then, the control section 37 writes the area corner coordinates, the input sub-area names and stay determination conditions, and unique sub-area IDs into the worktables.

When the entire store area 70 is divided into the sub-areas, the control section 37 stores the worktables as the sub-area setting table 39 into the output file.

The sub-area setting table 39 functions as a sub-area information storage section that stores information specifying the sub-areas into which the inside of the store is divided, that is, the area corner coordinates. Information specifying the sub-areas is not limited to the area-corner coordinates and it may be replaced by any information that can specify the position of each sub-area.

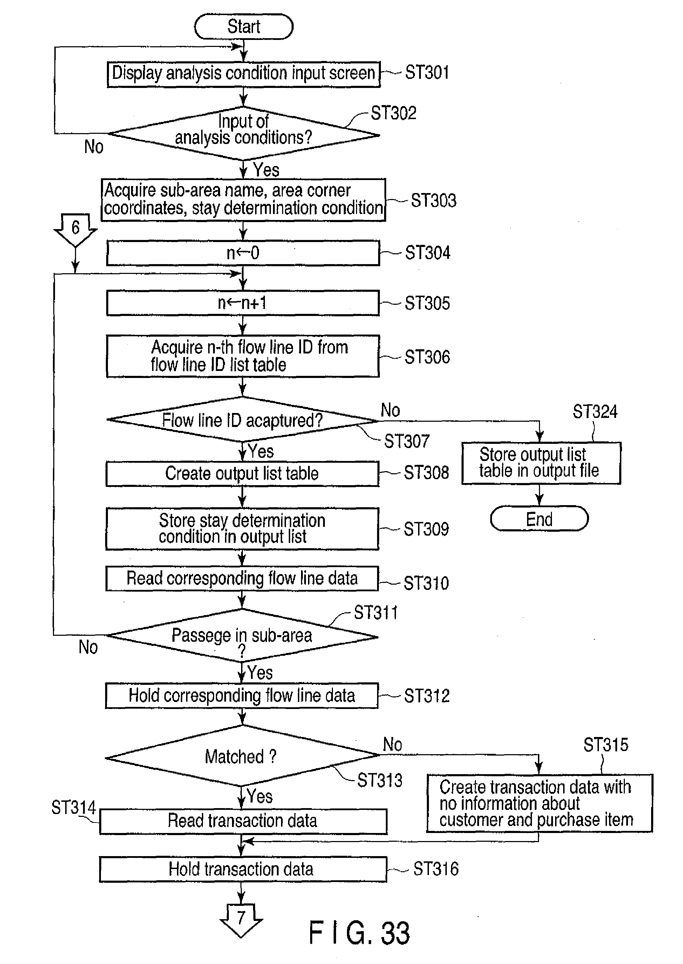

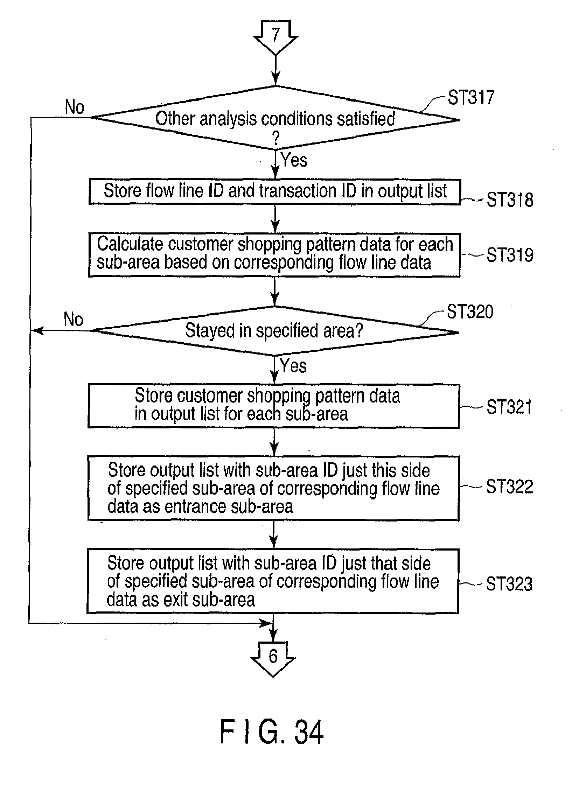

When the sub-area setting table 39 is prepared, the behavior analysis business is made executable. If is confirmed that the complete flow line database 38 and the sub-area setting table 39 are prepared in the output file 36, the control section 37 executes behavior analysis processing. The procedure of this processing is specifically shown in the flowcharts of FIGS. 33 and 34.

In Step ST301, the control section 37 displays on the display section 32 an input screen for analysis conditions. The analysis conditions include items, such as a sub-area ID specifying a sub-area, an item ID or category ID specifying a specific item of merchandise or merchandise group, a transaction period, a transaction time zone, and customer base. Of these items, the input of a sub-area ID is essential and the other items may be input as necessity requires.

It is assumed, as an example, that the apparatus analyzes the behaviors of male customers who stayed in a box lunch area from AM 11:00 to PM 1:00 and bought fried chicken box lunches during the period from July 1 to July 31, 2007. In this case, the operator inputs, through the input section 31, the sub-area ID of the sub-area name, "magazine," the item ID of the article name, "fried chicken box lunch," the transaction period, "20070701 to 20070731," the transaction time zone, "11:00 to 13:00," and customer base, "male".

It is assumed, as another example, that the apparatus analyzes the behaviors of customers who purchased any drink in the beverage area after staying in the box lunch area regardless of the transaction period and time zone. In this case, the operator inputs, through the input section 31, the sub-area ID of the sub-area name, "box lunch" and the category ID of the merchandise category, "beverage". No information about the transaction period, transaction time zone, and customer base is input.

In both the examples, instead of IDs, names may be entered in the items of the sub-areas, merchandise, and merchandise categories.

In Step ST302, the control section 37 waits until analysis condition items are input from an analysis condition input screen. If the analysis condition items are input through the input section 31 (YES in Step ST302), the control section 37 extracts a sub-area ID from the input items (filter condition acceptance means). In Step ST303, the control section 37 searches the sub-area setting table 39 in order to acquire data (i.e., a sub-area name, area corner coordinates, and condition for stay determination) corresponding to the sub-area ID.

If the control section 37 acquires the data (i.e., a sub-area name, area corner coordinates, and a condition for stay determination) from the sub-area setting table 39, it initializes a counter n to "0" in Step ST304. In Step ST305, the control section 37 increases the value of the counter n by the amount, "1".

Each time the value of the counter n increases, the control section 37 performs the process described below. In Step ST306, the control section 37 searches a flow line ID list table 62 in order to capture a flow line ID stored in a table number n (n represents the value of the counter n).

In Step ST307, the control section 37 determines whether or not the flow line ID with the table number n has been captured from the flow line ID list table 62. If it has been captured (YES in Step ST307), the control section 37 creates an output list table 80 in the data storage section 35 in Step ST308.

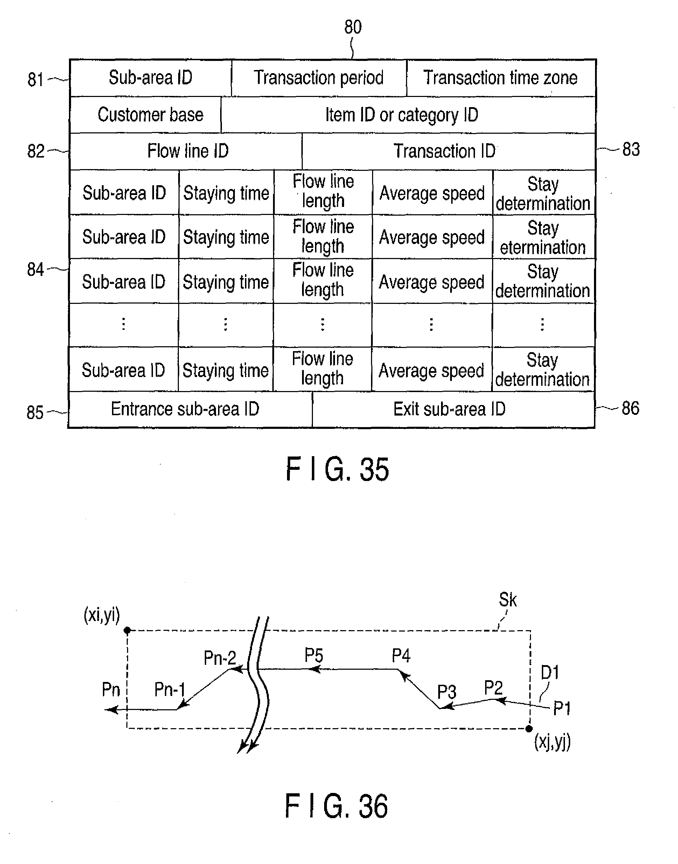

As shown in FIG. 35, the output list table 80 has an analysis condition item area 81, flow line ID area 82, transaction ID area 83, behavior data area 84 for each sub-area, entrance sub-area ID area 85, and exit sub-area ID area 86. The analysis condition item area 81 is divided into a sub-area ID area, transaction period area, transaction time zone area, customer base, and item ID area or merchandise category ID area. The behavior data area 84 for each sub-area is divided into a staying time area, flow line length area, average moving speed area, and stay determination flag area, all of which are available for the sub-area ID of each of the sub-areas S1 to S19.

If the output list table 80 is formed, the control section 37 sets data of analysis condition item input in the analysis condition item areas 81 of the output list table 80 through the analysis condition input screen (Step ST309).

Then, in Step ST310, the control section 37 retrieves the complete flow line database 38 in order to read the flow line data assigned by the flow line ID fetched from the flow line ID list table 62.

If the flow line data can be read from the complete flow line database 38, the control section 37 determines in Step ST311 whether or not the customer corresponding to the flow line data has passed through the specified sub-area. The specified sub-area is a sub-area assigned by a sub-area ID specified as an analysis condition.

The control section 37 acquires the area corner coordinates (xi, yi) (xj, yj) of the specified sub-area from the sub-area setting table 39. Then, the control section 37 checks whether or not the two-dimensional coordinates (x, y) in each of three-dimensional coordinates composing the flow line data include coordinates (xp, yq){i≤p≤j and i≤q≤j} that define the position in a rectangular area defined by the area corner coordinates.

If the two-dimensional coordinates (x, y) mentioned above include no coordinates (xp, yq), the control section 37 determines that the customer corresponding to the flow line data has not passed through the specified sub-area. In this case (NO in Step ST311), the control section 37 deletes the flow line data.

If it includes any coordinates (xp, yq), the control section 37 determines that the customer corresponding to the flow line data has passed through the specified sub-area. In this case (YES in Step ST311), the control section 37 stores the flow line data in the data storage section 35 as a candidate for analysis (Step ST312) (flow line data extraction means).

If the flow line data determined to be a candidate for analysis is stored in the data storage section 35, the control section 37 searches the matching table 63 in order to determine whether or not a transaction ID is matched with the flow line ID of the flow line data (Step ST313).

If a transaction ID is matched with the flow line ID (YES in Step ST313), the control section 37 accesses the POS server 12 through the communication section 33 and reads from the transaction database 14 the transaction data defined by the transaction ID (Step ST314).

If no transaction ID is matched with the flow line ID (NO in Step ST313), the control section 37 creates a mock transaction data (Step S315). This mock transaction data has no data about a transaction number, terminal number, transaction date/time, total payment, payment section, or purchased merchandise. No information is available on the customer base, either.

If the transaction data is read from the transaction database 14 or the mock transaction data is created, the control section 37 stores this transaction data into the data storage section 35 as a candidate for analysis (Step ST316) (transaction data specification means).

Next, in Step ST317, the control section 37 determines whether or not the flow line data and transaction data set as the candidates for analysis satisfy analysis conditions other than sub-area alone.

If an item ID or category ID specifying a particular item of merchandise or merchandise group is specified as an analysis condition, the control section 37 determines whether or not the transaction data that is the candidate for analysis includes purchased merchandise data that contains the specified item ID or category ID. If it contains this purchased merchandise data, analysis conditions are satisfied. If not, they are not satisfied, in which case, the control section 37 deletes the flow line data and transaction data as candidates for analysis.

If at least a transaction period or transaction time zone is specified as an analysis condition, the control section 37 determines whether or not the transaction date/time in the flow line data set as the candidate for analysis is within the specified transaction period or time zone. If the transaction date/time is within the transaction period or time zone, the analysis conditions are satisfied. If not, the analysis conditions are not satisfied, in which case, the control section 37 deletes the flow line data and transaction data as target of analysis.

If the customer base is specified as an analysis condition, the control section 37 determines whether or not the customer base in the transaction data as a target of analysis meets the specified condition. If the specified condition is met, the analysis condition is satisfied. If not, the analysis condition is not satisfied, in which case, the control section 37 deletes the flow line data and transaction data set as target of analysis.

If the flow line data and transaction data as candidates for analysis satisfy none of the analysis conditions other than the sub-area as described above (NO in Step ST317), the control section 37 deletes the flow line data and transaction data.

Conversely, if the flow line data and transaction data as candidates for analysis satisfy all specified analysis conditions (YES in Step ST317), a flow line ID in the flow line data as a candidate for analysis is set in the flow line ID area 82 of the output list table 80 by the control section 37 (Step ST318). In addition, a transaction ID in the transaction data as a candidate for analysis is set in the transaction ID area 83 of the output list table 80.

In Step ST319, based on the flow line data as candidates for analysis, the control section 37 calculates customer behavior data, that is, the staying time, flow line length, and average moving speed in each sub-area of each customer corresponding to the flow line data.

Using FIG. 36, next will be described a method for calculating customer behavior data. FIG. 36 shows an example of data on one flow line of a customer who has passed through a sub-area Sk specified by area corner coordinates (xi, yi) (xj, yj). Each of points P1 to Pn on the flow line data represents the two-dimensional coordinates (xt, yt) of a customer observed at time t (1≤t≤n).

The staying time is the difference between the time t1 at the point P1 immediately before a customer enters a sub-area Sk and the time tn at the first point Pn after the customer exits from the sub-area Sk. Specifically, the staying time is calculated as [tn-t1].

The moving distance between the two points Pi and Pi+1 on the flow line data is expressed by the following formula (10) when defined by a Euclidean distance function.

Moving distance between the two points Pi and Pi+1 <u>def</u> (distance between P1 and Pi+1)

$$ex. \sqrt{(x_{i+1} - x_i)^2 + (y_{i+1} - y_i)^2} \qquad \ldots \ (10)$$

The flow line length in the sub-area Sk is the sum of the moving distances between the two points observed in the sub-area Sk in time series, and is expressed by the following formula (11)

Flow line length <u>def</u> (all moving distances between each pair of points observed in the shop in time series)

$$= \sum_{i=1}^{n-1} \overline{P_i P_{i+1}} = \sum_{i=1}^{n-1} \sqrt{(x_{i+1} - x_i)^2 + (y_{i+1} - y_i)^2} \qquad \ldots \ (11)$$

The average moving speed in the sub-area Sk is calculated by dividing the flow line length in the sub-area Sk by the staying time, and is expressed by the following formula (12).

Average moving speed <u>def</u> (all moving distances between each pair of points observed in the shop in time series)/(total staying time in the shop)

$$= \frac{\sum_{i=1}^{n-1} \overline{P_i P_{i+1}}}{t_n - t_1} = \frac{\sum_{i=1}^{n-1} \int_{t_i}^{t_{i+1}} v_{i,i+1} \cdot \Delta t_{i,i+1} dt}{t_n - t_1} \qquad \ldots \ (12)$$

The [vi, i+1] of the right term of the above formula (12) represents the moving speed between the two points observed in time series. If the speed v is constant in an interval $\Delta t$, the moving speed between the two points is expressed by the following formula (13).

$$v_{i,i+1} = \frac{\overline{P_i P_{i+1}}}{t_{i+1} - t_1} = \frac{\overline{P_i P_{i+1}}}{\Delta t_{i,i+1}} \qquad \ldots \ (13)$$

Accordingly, the average moving speed in the sub-area Sk is calculated by the following formula (14).

$$\text{Average moving speed} = \frac{\sum_{i=1}^{n-1} \int_{t_i}^{t_i - 1} \frac{\overline{P_i P_{i+1}}}{\Delta t_{i,i+1}} \cdot \Delta t_{i,i+1} dt}{t_n - t_1}$$

$$= \frac{\sum_{i=1}^{n-1} \overline{P_i P_{i+1}} \cdot (t_{i+1} - t_i)}{t_n - t_1} \qquad \ldots \ (14)$$

Upon the customer behavior data (i.e., staying time, flow line length, and average moving speed) in each sub-area being thus calculated, the control section 37 detects customer behavior data in the sub-area specified as the analysis condition (Step ST320). Based on the customer behavior data, the control section 37 then determines whether or not the customer stayed in the specified sub-area. Below is an algorithm for this determination.

First, the control section 37 searches the sub-area setting table 39 in order to acquire the stay determination condition data stored so as to correspond to the specified sub-area ID. If the stay determination condition data is acquired, the control section 37 detects staying time data from customer behavior data in the specified sub-area, and then compares this staying time data and the stay determination condition data.

If the value of the staying time data is greater than that of the stay determination condition data, the control section 37 determines that the customer stayed in the specified sub-area. If the value of the staying time data is less than that of the stay determination condition data, the control section 37 determines that the customer merely passed through the specified sub-area without staying there.

If the determination is made that the customer did not stay in the specified sub-area (NO in Step ST320), the control section 37 deletes the flow line data and transaction data set as candidates for analysis.

If the determination is made that the customer stayed in the specified sub-area (YES in Step ST320), the customer behavior data already calculated that corresponds to the sub-area is set in the behavior data area 84 (corresponding to the sub-area) of the output list table 80 by the control section 37 (Step ST321). The control section 37 makes a stay determination in the manner described above for each of the sub-areas. For the sub-area ID of each sub-area in which it is determined that the customer stayed, a stay determination flag is set to "1". For the sub-area ID of each sub-area in which it is determined that the customer did not stay, the stay determination flag is reset to "0".

Next, based on the flow line data set as a candidate for analysis, the control section 37 specifies a sub-area located just this side of the specified sub-area the customer enters, that is, an entrance sub-area (Step ST322). Below is the algorithm for specifying the entrance sub-area.

First, using coordinates defining the position immediately before the entrance of the specified sub-area, the control section 37 searches the sub-area setting table 39. The control section 37 then acquires a sub-area ID defined by the area corner coordinates including those coordinates defining the position immediately before the entrance of the specified sub-area. If the sub-area ID is acquired, this ID is used as the ID for the entrance sub-area. The control section 37 sets this entrance sub-area ID into the entrance sub-area ID area 85 of the output list table 80.

Similarly, based on the flow line data record as a candidate for analysis, the control section 37 specifies a sub-area located just that side of the specified sub-area from which the customer exits, that is, an exit sub-area (Step ST323). Below is the algorithm for specifying the exit sub-area.

First, using coordinates defining the position just beyond the exit from the specified sub-area, the control section 37 searches the sub-area setting table 39. The control section 37 then acquires a sub-area ID defined by the area corner coordinates including the coordinates defining the position just beyond the exit from the specified sub-area. If the sub-area ID is acquired, this ID is used as the ID for the exit sub-area. The control section 37 sets this exit sub-area ID into the exit sub-area ID area 86 of the output list table 80.

Thereafter, the control section 37 deletes the flow line data and transaction data set as candidates for analysis.

Each time the value of the counter n is increased, the control section 37 repeats the processing of Step ST306 to Step ST323. When a flow line ID corresponding to the table number n cannot be captured from the flow line ID list table 62 (NO in Step ST307), the control section 37 writes and stores the output list table 80 into the output file 36 (Step ST324).

In the present embodiment, the flow line analysis apparatus 3 is configured to specify at least the sub-area as the analysis condition. When the sub-area is specified, the flow line data of a person having stayed in the specified sub-area is extracted from the flow line data stored in the complete flow line database 38. If the flow line data of the customer and the transaction data are matched in the matching table 63, the transaction ID of the transaction data is specified. Then, an output list table 80 in which the flow line ID and transaction ID of the flow line data and transaction data respectively are set is created and stored in the output file 36.

Accordingly, the flow line data of a customer who stayed in a specified sub-area and the transaction data of that customer can be specified from the contents of each of the output list table 80 stored in the output file 36. This makes it easy for the operator to make a detailed analysis of a customer behavior, such as the merchandise purchased by the customer who stayed in a specified sub-area, other areas through which this customer passed, or in which he or she stayed, etc.

The present embodiment allows a particular item of merchandise or merchandise group to be specified as an analysis condition. Upon specifying a particular item of merchandise or merchandise group, the control section 37 creates an output list table 80 that includes a combination of the flow line ID and transaction ID of a customer who, among customers who stayed in a specified sub-area, purchased a specified item of merchandise or merchandise group.

Accordingly, based on the contents of the output list table 80, the operator can narrow down customers to those who stayed in a specified sub-area and purchased a particular item of merchandise or merchandise group, and analyze the behavior of each of these customers in detail.

The present invention is not limited directly to the embodiment described above, and, in carrying out the invention, its components may be embodied in modified forms without departing from the spirit of the invention.

In the foregoing embodiment, for example, the POS server 12, which is provided with the transaction database 14, and the flow line server 20, which includes the original flow line database 41, camera image database 42, edit flow line database 43, setting database 44, camera parameter database 45, in-store area definition database 46, and in-store map database 47, are disposed outside the flow line analysis apparatus 3. The flow line analysis apparatus 3, POS server 12, and flow line server 20 are connected through the communication interface. Alternatively, however, the present invention may be realized in such a manner that all or some of the databases are provided within the flow line analysis apparatus 3.

In the foregoing embodiment, moreover, whether or not purchased merchandise data that contains the item ID or category ID specifying the specific item of merchandise or merchandise group is included, whether or not the transaction date/time is within the specified transaction period or time zone, or whether or not the customer base agrees with specified customer conditions, as well as whether or not a sub-area as a division of the sales area is passed, is given as an example of a condition for filtering the complete flow line data. However, the filter condition is not limited to these examples. For example, the purchase amount, number of purchase items, etc., may be included in POS data. The purchase frequency, membership, etc., may be included in attribute data. The flow line data may include the staying time, flow line length, average moving speed, entrance time, etc.

In the case described in connection with the present embodiment, the apparatus is previously registered with the flow line editing program P1 and the flow line analysis program P2 as functions for carrying out the invention. Alternatively, however, similar functions may be downloaded from a network into the apparatus, or the apparatus may be installed with similar functions that are stored in a recording medium. The recording medium may be a CD-ROM or any other suitable medium that can store programs and be read by the apparatus. Further, the functions that are previously installed or downloaded can be fulfilled in cooperation with an operating system or the like in the apparatus.

## Claims

1. A flow line analysis apparatus **characterized by** comprising:

   flow line generating means (ST31 to ST38) for generating a flow line indicative of a trajectory of a person from a camera image obtained by shooting a sales area;
   complete flow line editing means (ST3 to ST19) for editing a complete flow line, as an entire trajectory within a predetermined range in the sales area, for each customer who makes a purchase in the sales area, based on data for the flow line generated by the flow line generating means;
   flow line reproduction means (ST206) for reproducing trajectories of customers moving in the sales area, based on complete flow line data edited for each customer by the complete flow line editing means;
   settlement information acceptance means (ST207 to ST208) for accepting input of information on transaction settlements by the customers whose trajectories of movement in the sales area are reproduced by the flow line reproduction means;
   complete flow line data storage means (ST209) for adding the information on the transaction settlements of which input is accepted by the settlement information acceptance means to the complete flow line data of the customers and storing the information into a complete flow line data storage section; and
   flow line matching means (ST221 to ST225) for accessing a transaction database stored with transaction data indicative of contents of transactions with the customers and matching the complete flow line data stored in the complete flow line data storage section with transaction data specified by the information on the transaction settlements added to the complete flow line data.

2. A flow line analysis apparatus according to claim 1, **characterized by** further comprising matching data output means (ST228) for outputting data indicative of a combination of the complete flow line data and the transaction data matched by the flow line matching means.

3. A flow line analysis apparatus according to claim 1, **characterized by** further comprising filter condition acceptance means (ST302) for accepting condition input for filtering the complete flow line data.

4. A flow line analysis apparatus according to claim 3, **characterized by** further comprising flow line data extraction means (ST312) for extracting complete flow line data corresponding to a condition of which input is accepted by the filter condition acceptance means from the complete flow line data storage section.

**5.** A flow line analysis apparatus according to claim 1, **characterized in that** the complete flow line editing means accepts alternative input of flow line data as a coupling source or flow line data as a coupling destination, out of the flow line data generated by the flow line generating means, and edits a trajectory from a start point of a selected coupling source flow line to an end point of a selected coupling destination flow line.

**6.** A flow line analysis apparatus according to claim 1, **characterized in that** the flow line reproduction means includes camera image reproduction means for reproducing a camera image, in which a flow line being reproduced is generated, as the flow line moves.

**7.** A flow line analysis apparatus according to claim 1, **characterized in that** the settlement information acceptance means accepts input of date/time data for settlements as the information on transaction settlements.

**8.** A flow line analysis apparatus according to claim 7, **characterized in that** the flow line matching means matches the complete flow line data with transaction data with date/time data with a minimum difference from the date/time data accepted by the settlement information acceptance means.

Flow line
analysis apparatus

Output file ~36

Complete flow
line database ~38

~3

34

Program
storage section

P1   P2

Data storage
section

35

Control
section

37

Communication
section ~33

Input section 31

Display
section

32

2~

Flow line server

20

CA --- CA

Flow line
management apparatus

POS server ~1

Transaction
database ~12
~14

11a

POS terminal

13~

POS terminal

Sales management
device          11b

F I G. 1

| Transaction serial number | 123 | Terminal number | 1 | Transaction time/date | 2007/4/9 12:12:45 | |
|---|---|---|---|---|---|---|
| Total payment | 870 | Payment method | 1:Cash | Customer base | 1:Male 3:Thirties | |
| Item ID | Merchandise name | | Category ID | Category name | | Unit price |
| 4910001 | Lunch box A | | 001 | Lunch box | | 500 |
| 4920002 | Oolong tea B | | 002 | Drink | | 150 |
| 4930003 | Yogurt C | | 003 | Dessert | | 120 |
| 4940004 | Chewing gum D | | 004 | Confectionary | | 100 |

14R

# F I G. 2

F I G. 3

20

Flow line server

22

Storage section    45     46     47

Setting database

Camera parameter database

In-store area definition database

In-store map database

44

Original flow line database

Camera image database

Edit flow line database

41      42      43

Flow line data generation section    21

CA1    CA2    CA3     CA4    CA5    CA6

F I G. 4

41

| Top frame flow line data |
|---|
| Second frame flow line data |
| Third frame flow line data |
| ⋮ |
| Last frame flow line data |

| Camera image file name |
|---|
| Offset value of camera-specific frame image |
| Shooting date/time information |
| Number of targets |
| ID, X, Y, H (for number of targets) |
| ⋮ |

## FIG. 5

Edit flow line data

| Flow line ID |
|---|
| Start point coordinates (X0, Y0) |
| End point coordinates (Xn, Yn) |
| Index (X, Y, H, T, F) |
| Index (X, Y, H, T, F) |
| Index (X, Y, H, T, F) |
| ⋮ |
| Index (X, Y, H, T, F) |
| State status |
| Disabling status |
| Partial flow line status |
| Coupling definition information [start point] |
| Coupling definition information [pre-coupling D] |
| Coupling definition information [post-coupling D] |

## FIG. 6

EP 2 109 076 A1

| ID | Start | End | |
|----|-------|-----|--|
| | | | |

(Image of camera 1)

(Image of camera 2)

(Image of camera 3)

(Image of camera 4)

(Image of camera 5)

(Image of camera 6)

Coordinate

| ID | offset | X | Y | H | location |
|----|--------|---|---|---|----------|

FIG. 7

```
                    ┌──────────────┐
                    │    Start     │
                    └──────┬───────┘
                           ▼
        ┌────────────────────────────────┐
        │  Display flow line editing screen  │───ST1
        └────────────────┬───────────────┘
                           ▼
        ┌────────────────────────────────┐
        │ Flow line data creation processing │───ST2
        └────────────────┬───────────────┘
                           ▼
        ┌────────────────────────────────┐
        │ Flow line state definition processing │───ST3
        └────────────────┬───────────────┘
                           ▼
        ┌────────────────────────────────┐
        │   Flow line disabling processing   │───ST4
        └────────────────┬───────────────┘
                           ▼
        ┌────────────────────────────────┐
        │   Flow line division processing    │───ST5
        └────────────────┬───────────────┘
                           ▼
        ┌────────────────────────────────┐
        │      Display flow line list        │───ST6
        └────────────────┬───────────────┘
                           ▼
    No  ◇ Flow line selected ? ◇───ST7
        │         Yes
        ▼
```

ST18

0

Coupling source flow line ← selected flow line ───ST8

Coupling source flow line ← coupling destination flow line . ───(ST18)

Coupling source flow line reproduction processing ───ST9

No ◇ Reproduction terminated? ◇───ST10

ST11 — Yes

◇ Complete flow line ? ◇ No ───→ ST12 Coupling destination flow line candidate retrieval processing

ST16 — Yes

Coupling definition processing ───ST13 ◇ Coupling destination flow line selected ? ◇ No

ST17

◇ Defined up to exit ? ◇ No

0

Yes

ST14 Coupling destination flow line reproduction processing

ST19

No ◇ Flow line selection completed ? ◇

Yes

ST15 ◇ Coupling destination determined ? ◇ No

Yes

ST20

Coupling processing ───ST20

┌──────────────┐
│     End      │
└──────────────┘

# F I G. 8

Creation processing

Clear edit flow line database — ST31

N ← 0 — ST32

Retrieve ID = N — ST33

ST34

ID = N present ? — No

Yes

Acquire start point coordinate, end point coordinate, and index of ID=N to create edit flow line record — ST35

Store edit flow line data in edit flow line database — ST36

N ← N + 1 — ST37

ST38

Store last ID : "N-1"

Return

F I G. 9

```
         ┌───────────────────────────────┐
         │   State definition processing  )
         └───────────────┬───────────────┘
                         ↓
         ┌───────────────────────────────┐
    ─────│     Extract edit flow line data │─── ST40
    │    └───────────────┬───────────────┘
    │   ST41             ↓
    │      ╱─────────────────────╲       No
    │     ╱     Start point        ╲──────────→ ⬇ 1
    │     ╲   in entrance area      ╱
    │      ╲         ?             ╱
    │       ╲───────┬─────────────╱
    │   ST42        ↓ Yes
    │      ╱─────────────────────╲       No
    │     ╱      End point         ╲──────────────────────────┐
    │     ╲   in entrance area      ╱                          │
    │      ╲         ?             ╱                           ↓
    │       ╲───────┬─────────────╱           ┌──────────────────────────────────┐
    │   ST43        ↓ Yes                       │ State : entrance→inside of store   │
    │      ╱─────────────────────╲    No        └────────────────┬─────────────────┘
    │     ╱  Entrance area left?    ╲────┐                        │
    │      ╲──────┬──────────────╱       │                        │
    │             ↓ Yes                  │                        │
    │   ┌────────────────────────┐       ↓                        │
    │   │ State : entrance→entrance│  ┌─────────────────┐         │
    │   └──────────┬─────────────┘   │ State : entrance │         │
    │              │                 └────────┬─────────┘         │
    │              │                          └──────────┬────────┘
    │              ↓          ⬇ 1
```

F I G. 10

F I G. 11

Division processing

Extract edit flow line data — ST60

Flow line tracing processing — ST61

Change point present ? — Yes → Record change point / ST62

No

Tracing terminated ? — No

Yes

Change point included ? — Yes → ST64

ST63

Flow line division processing at change point

No

Disable partial flow line data in disabled area

ST65

All flow lines confirmed ? — No

Yes

Time conditions enabled ? — No / ST66

Yes

Extract partial flow line data

Calculate flow line tracing time

Not greater than threshold value ? — Yes → Disable partial flow line data

No

All partial flow lines confirmed ? — No

Yes

Return

F I G. 12

Coupling source flow line reproduction processing

Acquire original flow line data
having target information of
coupling source flow line ID
— ST71

Acquire camera image file having set
camera image file name of obtained
original flow line data
— ST72

Select original flow line data in
chronological order of frame date/time
— ST73

Acquire coordinate of target information
having set coupling source flow line
ID from selected original flow line data
— ST74

Extract frame image specified by offset
value of selected original flow line data
— ST75

Convert coordinate of acquired
target information into camera
image system coordinates
— ST76

Display flow line, camera image,
and coupling source flow line ID
— ST77

Yes ◁ Next original
flow line data present
? ST78

No

Return

F I G. 13

Coordinate conversion processing

Translate flow line coordinate to coordinate system using camera position as start point — ST81

Use rotation angle of camera in world coordinate system to rotate flow line coordinates — ST82

ST83
Fish-eye camera ?

No

Yes  ST84

ST85

Use parameters of fish-eye camera to convert flow line coordinates into camera image coordinate system from world coordinate system

Use parameters of omnidirectional camera to convert flow line coordinates into camera image coordinate system from world coordinate system

Translate converted coordinates to start point of camera image coordinate system — ST86

Return

F I G. 14

Candidate retrieval processing

Acquire retrieval conditions — ST91

What is retrieval conditions ?

ST92 | Time — Distance

Acquire coupling source flow line end time

ST95

Acquire coupling source flow line end position

ST93

Extract coupling destination flow line

ST96

Extract coupling destination flow line

Calculate time difference between coupling source flow line end time and coupling source flow line start time

Calculate distance between coupling source flow line end position and coupling destination flow line start position

No — Time difference less than or equal to threshold value ?

No — Distance less than or equal to threshold value ?

Yes

Candidate flow line← coupling destination flow line

Yes

Candidate flow line← coupling destination flow line

No — All coupling destination flow lines confirmed ?

No — All coupling destination flow lines confirmed ?

ST94 | Yes

List and display candidate flow lines in ascending order of time difference

ST97 | Yes

List and display candidate flow lines in ascending order of distance

Return

F I G. 15

( Coupling definition processing )

↓

Judge state of coupling source flow line ─ST101

↓

Entrance→entrance ? ── Yes ──→

No↓

Start point of source flow line :
"coupling source flow line ID"
Pre-coupling ID of source flow line :
"no setting"
Post-coupling ID of source flow line :
"no setting"

↓

( Return )

No ── Entrance→inside of store ?

ST102

Yes↓

Judge state of coupling destination flow line

↓

Inside of store
→inside of store ? ── No ──→

Yes↓

Start point of source flow line or destination
flow line: "coupling source flow line ID"
Pre-coupling ID of source flow line:
"no setting"
Pre -coupling ID of destination flow line:
"coupling source flow line ID"
Post-coupling ID of source flow line:
"coupling destination flow line ID"

↓

( Return )

Start point of source flow line or
destination flow line : "coupling source
flow line ID"
Pre-coupling ID of source flow line :
"no setting"
Pre-coupling ID of destination flow line :
"coupling source flow line ID"
Post-coupling ID of source flow line :
"coupling destination flow line ID"
Post-coupling ID of destination
flow line : "no setting"

↓

( Return )

Judge state of coupling destination flow line ─ ST103

↓

Inside of store→inside of store
? ── No ──→

Yes↓

Start point of destination flow line:
"start point of coupling source flow line"
Pre-coupling ID of destination flow line:
"coupling source flow line ID"
Post-coupling ID of source flow line:
"coupling destination flow line ID"

↓

( Return )

Start point of destination flow line :
"start point of coupling source flow line"
Pre-coupling ID of destination flow line :
"coupling source flow line ID"
"Post-coupling ID of source flow line :
"coupling destination flow line ID"
Post-coupling ID of destination flow line
line : "no  setting"

↓

( Return )

## F I G. 16

41

Coupling processing

Select flow line having pre-coupling ID set to "no setting" from coupling defined flow lines→flow line A — ST111  3

Select flow line having coupling defining information "post-coupling ID" of flow line A→flow line B — ST112

Compare coupling defining information "start point" of flow line A with coupling defining information "start point" of flow line B — ST113

Coincident start points? — No

↓Yes

Compare flow line ID of flow line A with coupling defining information "pre-coupling ID" of flow line B — ST114

Coincident IDs? — No

↓Yes

Error

Calculate difference between end time of flow line A and start time of flow line B — ST115

Difference within one frame? — No

Yes ←

Interpolation processing

Couple flow lines A and B — ST116

Judge coupling defining information "post-coupling ID" of flow line B — ST117

ID = no setting ? — No

↓Yes

Flow line B→ flow line A

No — Defined flow line completed ?

ST118

↓Yes

3

Return

# FIG. 17

Complete flow line data

| |
|---|
| Flow line ID |
| Start point coordinates (X0, Y0) |
| End point coordinates (Xn, Yn) |
| Index (X, Y, H, T, F) |
| Index (X, Y, H, T, F) |
| Index (X, Y, H, T, F) |
| ⋮ |
| Index (X, Y, H, T, F) |
| State status |
| Transaction date/time |
| Terminal number |

# F I G. 18

| | |
|---|---|
| Transaction ID list table | ~61 |
| Flow line ID list table | ~62 |
| Matching table | ~63 |

# F I G. 19

Accounting input processing

Display flow line analysis screen ─ST201

Retrieve complete flow line data ─ST202

Create complete flow line database ─ST203

Display complete flow line list ─ST204

ST205 — Complete flow line selected ? — No

Yes

Complete flow line reproduction processing ─ST206

ST211 — Processing terminated? — No

Yes

End

ST207 — Reproduction terminated ? — No

Yes

ST208 — Terminal number input? — No

Yes

Stop reproduction of complete flow line ─ST210

Overwrite complete flow line data with transaction date/time and terminal number

ST209

F I G. 20

Transaction matching processing

ST221 — Clear various worktables

ST222

No — Matching period input?

Yes

ST223 — Acquire transaction ID list during matching period

ST224 — Acquire flow line ID list during matching period

ST225 — Automatic flow line matching processing

ST226

Unmatched flow line present? — Yes — ST227

Manual flow line matching processing

No

ST228 — Output flow line matching list to file

End

F I G. 21

Start

ST231 — Create SQL to extract transaction ID

ST232 — Transmit SQL to POS server

ST233 — Load transaction ID into transaction ID list table

End

## F I G. 22

SQL

SELECT terminal number, transaction date/time, transaction serial number

FRPM TRAN_TABLE transaction date/time BETWEEN#YYYY/MM/DDhh:mm#

AND#YYYY/MM/DDhh:mm#GROUP BY terminal No, transaction date/time,

transaction serial number ORDER BY transaction date/time

## F I G. 23

Start

N ← 0 —— ST241

N ← N+1 —— ST242

Acquire a flow line data record No. N —— ST243

ST244

Unacquirable? —— Yes

No

ST245

Customer's flow line? —— No

Yes —— ST246

Acquire and load flow line ID, terminal number, and transaction date/time into flow line ID list table

ST247

Sort data in ascending order of transaction date/time

End

F I G. 24

Start

ST251 — i ← 1, j_start ← 1

ST252 — Δ ← ∞, j ← j_start, j_min ← 0

ST253 — Acquire transaction date/time Ti of Track(i)

ST256 — j ← j+1

ST254 — Acquire a transaction date/time Tj of Tran(j)

ST257 — j<m — Yes / No

4

ST255 — Ti- θ ≦ Tj — No

Yes

ST258 — j_start ← j

Acquire terminal number Ri of Track(i) — ST259

Acquire terminal number Rj of Tran(j) — ST260

ST261 — Ri=Rj — No

Yes

ST262 — j ← j+1

ST264 — δ ← | Tj-Ti |

ST263 — j<m — Yes / No

ST265 — δ < Δ — No

4

Yes

ST265 — Δ ← δ, j_min ← j

ST267 — j ← j +1

ST268 — Tj<Ti+ θ — Yes

4 — No

ST269 — j<m — Yes / No

ST270 — j_min=0 — Yes

No

ST272 — i ← i+1

Set flow line ID of Track(i) and transaction ID of Tran(j_min) in matching table

ST273 — i<n — Yes / No

ST271

End

F I G. 25

| Terminal number | Transaction date/time | Transaction serial number |
|---|---|---|
| 1 | 2007/4/9 10:12:45 | 123 |
| 1 | 2007/4/9 10:15:31 | 124 |
| 2 | 2007/4/9 10:16:20 | 567 |
| 1 | 2007/4/9 10:19:53 | 125 |
| 2 | 2007/4/9 10:20:05 | 568 |
| ⋮ | ⋮ | ⋮ |

~61

## F I G. 26

| Flow line ID | Terminal number | Transaction date/time |
|---|---|---|
| 123401 | 1 | 2007/4/9 10:12:41 |
| 123402 | 1 | 2007/4/9 10:15:29 |
| 123403 | 2 | 2007/4/9 10:16:17 |
| 123404 | 1 | 2007/4/9 10:19:49 |
| 123405 | 2 | 2007/4/9 10:20:01 |
| ⋮ | ⋮ | ⋮ |

~62

## F I G. 27

| Flow line ID | Terminal number | Transaction date/time | Transaction serial number |
|---|---|---|---|
| 123401 | 1 | 2007/4/9 10:12:45 | 123 |
| 123402 | 1 | 2007/4/9 10:15:31 | 124 |
| 123403 | 2 | 2007/4/9 10:16:20 | 567 |
| 123404 | 1 | 2007/4/9 10:19:53 | 125 |
| 123405 | 2 | 2007/4/9 10:20:05 | 568 |
| ⋮ | ⋮ | ⋮ | ⋮ |

~63

## F I G. 28

Start

Acquire a transaction date/time Ti and terminal number Ri of unmatched flow line — ST281

ST282 — $k \leftarrow 1$

ST283 — $\theta \leftarrow \theta + k\theta$

ST284 — Acquire transaction ID data with transaction time of $Ti\text{-}\theta \sim Tl\text{+}\theta$

ST285 — Eliminate matched data from acquired transaction ID data

ST286 — Eliminate data on terminal numbers except Ri from the acquired transaction ID data

ST287 — Candidate transaction present ? — No

Yes

ST288 — Display unmatched flow line

ST289 — Display candidate transaction list

ST290 — Candidate transaction selected ? — No

Yes

Display contents of candidate transaction — ST291

ST292 — Matching executed ? — Yes

No

ST293 — No candidate transaction ? — No

Yes

5

5

ST295

$k \leftarrow k+1$

ST296 — $k > kMAX$ — No

Yes

ST294

Set flow line ID of unmatched flow line and transaction ID of candidate transaction in matching table

End

F I G. 29

| Sub-area ID | Sub-area name | Area corner coordinates | Stay determination condition |
|---|---|---|---|
| SA001 | Entrance | $(x1,y1)\sim(x2,y2)$ | 10 sec |
| SA002 | Merchandise group A | $(x3,y3)\sim(x4,y4)$ | 120 sec |
| SA003 | Merchandise group B | $(x5,y5)\sim(x6,y6)$ | 60 sec |
| SA004 | Merchandise group C | $(x7,y7)\sim(x8,y8)$ | 60 sec |
| ⋮ | ⋮ | ⋮ | ⋮ |

~39

F I G. 30

FIG. 31 (floor layout diagram)

~70

Merchandise group B
Merchandise group B
Merchandise group B

Merchandise group C
Merchandise group D
Merchandise group D

Merchandise group O
Merchandise group P

Merchandise group M
Merchandise group N
Merchandise group K
Merchandise group L

Terminal number 1   ~72

Merchandise group I
Merchandise group J
Merchandise group G
Merchandise group H

Terminal number 2   ~73

Merchandise group E
Merchandise group F

Merchandise group A
Merchandise group A
Merchandise group A

Entrance

74

71

F I G. 31

F I G. 32

Start

Display analysis condition input screen — ST301

Input of analysis conditions? — ST302

No

Yes

Acquire sub-area name, area corner coordinates, stay determination condition — ST303

6

n←0 — ST304

n←n+1 — ST305

Acquire n-th flow line ID from flow line ID list table — ST306

Flow line ID acaptured? — ST307

No — ST324

Store output list table in output file

End

Yes

Create output list table — ST308

Store stay determination condition in output list — ST309

Read corresponding flow line data — ST310

Passege in sub-area ? — ST311

No

Yes

Hold corresponding flow line data — ST312

Matched ? — ST313

No — ST315

Create transaction data with no information about customer and purchase item

Yes

ST314

Read transaction data

Hold transaction data — ST316

7

F I G. 33

```
                              ┌─7─┐
                              └─┬─┘
                                │
                                ▼
    No            ╱───────────────────────────────╲        ╭─ ST317
   ◄──────────────   Other analysis conditions satisfied  ╱
   │               ╲              ?                ╱
   │                ╲───────────────┬─────────────╱
   │                              │Yes
   │                              ▼
   │           ┌─────────────────────────────────────────┐
   │           │ Store flow line ID and transaction ID in output list │── ST318
   │           └─────────────────┬───────────────────────┘
   │                             ▼
   │           ┌─────────────────────────────────────────┐
   │           │ Calculate customer shopping pattern data for each │── ST319
   │           │ sub-area based on corresponding flow line data    │
   │           └─────────────────┬───────────────────────┘
   │                             ▼
   │    No        ╱───────────────────────────────╲        ╭─ ST320
   ◄──────────────      Stayed in specified area?         ╱
   │              ╲───────────────┬─────────────╱
   │                            │Yes
   │                            ▼
   │          ┌─────────────────────────────────────────┐
   │          │     Store customer shopping pattern data        │── ST321
   │          │       in output list for each sub-area          │
   │          └─────────────────┬───────────────────────┘
   │                            ▼
   │          ┌─────────────────────────────────────────┐
   │          │ Store output list with sub-area ID just this side │── ST322
   │          │ of specified sub-area of corresponding flow line  │
   │          │ data as entrance sub-area                         │
   │          └─────────────────┬───────────────────────┘
   │                            ▼
   │          ┌─────────────────────────────────────────┐
   │          │ Store output list with sub-area ID just that side │── ST323
   │          │ of specified sub-area of corresponding flow line  │
   │          │ data as exit sub-area                             │
   │          └─────────────────┬───────────────────────┘
   │                            │
   └────────────────────────────┤
                                ▼
                              ┌─6─┐
                              └───┘
```

# F I G. 34

80

| Sub-area ID | Transaction period | Transaction time zone |
|---|---|---|

81

| Customer base | Item ID or category ID |
|---|---|

| Flow line ID | Transaction ID |
|---|---|

82   83

| Sub-area ID | Staying time | Flow line length | Average speed | Stay determination |
|---|---|---|---|---|
| Sub-area ID | Staying time | Flow line length | Average speed | Stay etermination |
| Sub-area ID | Staying time | Flow line length | Average speed | Stay determination |
| ⋮ | ⋮ | ⋮ | ⋮ | ⋮ |
| Sub-area ID | Staying time | Flow line length | Average speed | Stay determination |

84

| Entrance sub-area ID | Exit sub-area ID |
|---|---|

85   86

F I G. 35

F I G. 36

Europäisches
Patentamt

European
Patent Office

Office européen
des brevets

## EUROPEAN SEARCH REPORT

Application Number

EP 09 15 7799

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| X | US 2006/010028 A1 (SORENSEN HERB [US]) 12 January 2006 (2006-01-12) * abstract * * figures 1,2,4,5,12 * * paragraph [0006] * * paragraph [0019] - paragraph [0021] * * paragraph [0025] - paragraph [0026] * * paragraph [0029] - paragraph [0030] * * paragraph [0034] * * paragraph [0040] * ----- | 1-8 | INV. G06Q30/00 |
| X | US 7 319 479 B1 (CRABTREE RALPH N [US] ET AL) 15 January 2008 (2008-01-15) * abstract * * figures 2,4-7 * * column 3, line 45 - column 4, line 28 * ----- | 1-8 | |
| A | US 2003/164878 A1 (IIZAKA HITOSHI [JP]) 4 September 2003 (2003-09-04) * abstract; figures 2,4-6 * ----- | 1-8 | |
| A | US 2002/188457 A1 (JENKINS LAWRENCE A [US]) 12 December 2002 (2002-12-12) * abstract * * figures 2,3 * ----- | 1-8 | TECHNICAL FIELDS SEARCHED (IPC) G06Q |
| A | JP 2005 309951 A (OKI ELECTRIC IND CO LTD) 4 November 2005 (2005-11-04) * abstract; figure 1 * ----- | 1-8 | |

The present search report has been drawn up for all claims

| Place of search | Date of completion of the search | Examiner |
|---|---|---|
| The Hague | 30 June 2009 | van der Weiden, Ad |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

................................................................

& : member of the same patent family, corresponding
     document

EPO FORM 1503 03.82 (P04C01)

**ANNEX TO THE EUROPEAN SEARCH REPORT
ON EUROPEAN PATENT APPLICATION NO.**

EP 09 15 7799

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2009

| Patent document cited in search report | | | Publication date | Patent family member(s) | | Publication date |
|---|---|---|---|---|---|---|
| US 2006010028 | A1 | | 12-01-2006 | NONE | | |
| US 7319479 | B1 | | 15-01-2008 | NONE | | |
| US 2003164878 | A1 | | 04-09-2003 | JP 2000200357 A | | 18-07-2000 |
| | | | | KR 20000029317 A | | 25-05-2000 |
| US 2002188457 | A1 | | 12-12-2002 | AU 2002367954 A1 | | 18-06-2004 |
| | | | | WO 2004049230 A1 | | 10-06-2004 |
| JP 2005309951 | A | | 04-11-2005 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006350751 A